# EUROPEAN PATENT SPECIFICATION

(11) **EP 1 343 794 B1**
(45) Date of publication and mention of the grant of the patent: **18.10.2006**
(21) Application number: 01990541.3
(22) Date of filing: 07.12.2001
(51) Int. Cl.: C07F 17/00, C08F 10/00

(54) **ALLYL-METALLOCENE COMPLEXES AND THEIR USE IN THE CATALYSIS OF (CO)POLYMERIZATION PROCESSES OF ALPHA-OLEFINS**
ALLYL-METALLOCEN-KOMPLEXE UND DEREN VERWENDUNG FÜR DIE KATALYSE VON (CO)POLYMERISATIONSVERFAHREN VON ALPHA-OLEFINEN
COMPLEXES D'ALLYL-METALLOCENE ET LEUR UTILISATION DANS LA CATALYSE DE PROCESSUS DE (CO)POLYMERISATION D'ALPHA-OLEFINES

(30) Priority: 21.12.2000 IT MI20002776
(43) Date of publication of application: 17.09.2003
(73) Proprietor: Polimeri Europa S.p.A., 72100 Brindisi (IT)
(72) Inventor: SOMMAZZI, Anna, I-16038 Santa Margherita Ligure (IT); BORSOTTI, Giampietro, I-28100 Novara (IT); MASI, Francesco, I-26866 Sant'Angelo Lodigiano (IT); SANTI, Roberto, I-28100 Novara (IT); BRICCO, Valentina, I-28100 Novara (IT)
(74) Representative: De Gregori, Antonella
(86) International application number: PCT/EP2001/014492
(87) International publication number: WO 2002/050087

(56) References cited:
- KARL, J. ET AL.: "cp2zr(.mu.c4h6)(b(c6f5)3, a first example of a stable unbridged homogeneous metallocene-betaine ziegler catalyst system" JOURNAL OF ORGANOMETALLIC CHEMISTRY, vol. 535, no. 1-2, 1997, pages 59-62, XP004082162
- PASTOR, A. ET AL.: "pentamethylcyclopentadienyl-aminoborole derivatives of zirconium and hafnium with alkyl and allyl ligands" JOURNAL OF ORGANOMETALLIC CHEMISTRY, vol. 528, no. 1-2, 1997, pages 65-75, XP004056939
- CHEMICAL ABSTRACTS, vol. 120, no. 19, 9 May 1994 (1994-05-09) Columbus, Ohio, US; abstract no. 245378, ANTONELLI, D.M. ET AL.: "a thermally stable carbonyl complex of zirconium(iv). structure and reactivity ramifications of strong electron donation" XP002168984 & ORGANOMETALLICS, vol. 13, no. 3, 1994, pages 763-765,
- CHEMICAL ABSTRACTS, vol. 116, no. 12, 30 March 1992 (1992-03-30) Columbus, Ohio, US; abstract no. 129391, DUTHALER, R.O. ET AL.: "asymmetric carbon-carbon bond formation with titanium-, zirconium-, and hafnium-carbohydrate complexes" XP002168985 & DOETZ: "Org. Synth. Organomet., Proc. Symp., 3rd" 1991 , VIEWEG , BRAUNSCHWEIG
- BLENKERS, J. ET AL.: "tri-1-methallyl- and 1-methallylbutadiene group iv transition metal complexes" JOURNAL OF ORGANOMETALLIC CHEMISTRY, vol. 218, no. 3, 1981, pages 383-393, XP002168982
- CHEMICAL ABSTRACTS, vol. 116, no. 9, 2 March 1992 (1992-03-02) Columbus, Ohio, US; abstract no. 83821, BERCAW, J.E. ET AL.: "alkanediyl and related derivatives of permethylhafnocene" XP002168986 & ORGANOMETALLICS, vol. 11, no. 2, 1992, pages 639-645,
- TJADEN, E.B. ET AL.: "zirconacyclobutanes from thrmal rearrangement of permethylzirconocene bis(allyl) and related complexes. An unprecedented synthesis of beta-substituted metallacyclobutanes" JOURNAL OF THE AMERICAN CHEMICAL SOCIETY, vol. 115, 1993, pages 2083-2085, XP002168983

## Description

The present invention relates to a new group of allyl-metallocene complexes and their use in the catalysis of (co)polymerization processes of α-olefins.

More specifically, the present invention relates to a group of allyl-metallocene complexes which are relatively stable and particularly suitable for the formation of catalysts of the ionic type for the (co)polymerization of α-olefins.

It is generally known in the art that ethylene, or α-olefins in general, can be polymerized or copolymerized by means of low, medium or high pressure processes with catalysts based on a transition metal. A particular group of catalysts active in the polymerization of olefins consists of the combination of an organic oxyderivative of aluminum (in particular polymeric methylaluminoxane or MAO) with an η⁵-cyclopentadienyl derivative (metallocene) of a transition metal of group 4 of the periodic table (in the form approved by IUPAC and published by "CRC Press Inc." in 1989). For a known preparation technique of the above compounds, reference should be made to the description of H. Sinn, W. Kaminsky, in Adv. Organomet. Chem., vol. 18 (1980), page 99 and U.S. patent 4,542,199.

In spite of the numerous advantages with respect to the prior known art, represented by the traditional heterogeneous, or so-called Ziegler-Natta, catalysts of a multicentric nature, the above catalysts based on the combination of metallocenes and MAO have also proved to have various disadvantages, among which one of the most significant is the necessity of using high quantities of aluminum in the co-catalyst, which jeopardizes the properties of the polymer obtained therewith.

In an attempt to overcome problems particularly relating to the use of MAO, catalysts of the metallocene type have been recently developed, which are capable of polymerizing olefins also without aluminum compounds, or in the presence of a more limited quantity of this metal. These systems are commonly based on the formation of a catalytic species of a cationic nature, obtained by the contact of a suitable metallocene with an activator consisting of a strong Lewis acid or, more advantageously, an organometallic salt whose anion has a delocalized charge and is weakly co-ordinating, usually a fluorinated tetra-arylborane. Various cationic systems of this type are described for example, in the publications of R.R. Jordan in "Advances of Organometallic Chemistry", vol. 32 (1990), pages 325-387, and X. Yang et al. in "Journal of the American Chemical Society", vol. 116 (1994), page 10015, which, together with a detailed description of the field, provide numerous patent references on the subject.

Other cationic systems based on metallocenes and fluoro-aryl aluminates are described in international patent application WO 98/0715, and claim a greater catalytic activity. These catalysts however are relatively complex to prepare and are particularly unstable to air and humidity, analogously to those containing boron-anions, and in addition they are not easily adaptable to non-alkylated metallocene complexes.

One of the problems which has not yet been solved relating to metallocene catalysts of the ionic type is the relative complexity of their production process, as well as certain problems linked to their stability. It is known, in fact, that these ionic catalysts can be obtained by the direct reaction of an alkyl-metallocene, such as, for example, bis-indenyl zirconium dimethyl, with a suitable salt comprising a boron-anion with a delocalized charge and a cation capable of extracting an alkyl group bound to the metallocene and forming a neutral and stable molecule. The use of alkyl-metallocenes, however, creates problems relating to the conservation and stability of said compounds, and consequently the possibility of obtaining the same ionic metallocenes also starting from the respective chlorides but using an alkylaluminum for the intermediate formation, in situ, of an alkyl metallocene, is known. This latter method however does not allow full exploitation of the metallocene compound which is partly deactivated, and also leads to the use of considerable quantities of metal in the co-catalyst, even if these are not comparable to those of aluminum necessary for the first catalysts based on metallocene and MAO.

The production of metallocene catalysts for the polymerization of olefins therefore still seems to have significant drawbacks, in spite of the considerable progress made with respect to the traditional Ziegler-Natta polymerization, and there appears to be great room for further improvement to satisfy industrial and market demands which are becoming increasingly more sophisticated.

Studies on the structure and synthesis of bis-cyclopentadienyl-allyl complexes of metals of group 4 of the periodic table are described in literature, in the publication J. Organomet. Chem., 14, 149-156 (1968) page 150. In this study, a significant instability of these allyl complexes over a period of time, is observed. Furthermore, no mention is made of the possible use of these metallocene complexes in the polymerization catalysis of olefins, presumably because they are considered unsuitable with respect to other groups of metallocenes, such as halides, alcoholates and alkyls.

Other examples are disclosed in the following documents.

Chemical Abstract, vol. 120 abstract n. 245378 & Organometallics, Vol. 13, no. 3, 1994, pages 763-765 disclose ionic metallocene compounds comprising the anionic group BPh₄.

Chemical Abstract, vol. 116 abstract n. 129391 & Doetz ''Org.Synth-Organomet. Proc.Simp., 3^{rd}" 1991, disclose compounds comprising only one pentamethylcyclopentadienyl group, a methallyl group and one or two alkoxy groups of complex formula.

Journal of Organometallic Chemistry, vol. 218, no.3, 1981, pages 383-393 concerns compounds of Zr and Hf containing only one pentamethylcyclopentadienyl group and three methallyl groups.

Chemical Abstracts, vol. 116 abstract n. 83821 & Organometallics, vol.11, no. 2, 1992, pages 639-645 concerns bis-pentamethylcyclopentadienyl-allyl compounds.

Journal of American Chemical Society, vol.115, 1993, pages 2083-2085 discloses a number of bis-pentemethylcyclopentadienyl-allyl compounds of metals of group IV.

The Applicant has now found that particular allyl metallocene complexes are surprisingly suitable for the formation of ionic metallocene catalysts, as well as being good catalysts also when combined with MAO and similar cocatalysts. These complexes moreover are unusually stable with respect to the known cyclopentadienyl allyl complexes and form ionic catalysts with a high activity and low content of aluminum or other metals, if combined with the usual salts suitable for the purpose.

A first object of the present invention therefore relates to a cyclopentadienyl complex of a transition metal, having the following formula (Ia): 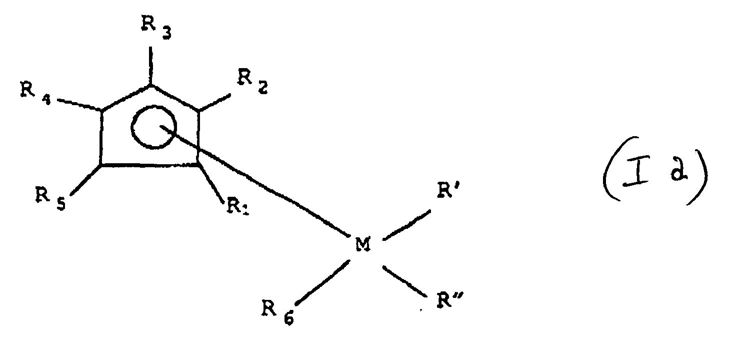 wherein:
- M is a metal selected from titanium, zirconium or hafnium, preferably titanium and zirconium;
- R' represents an allyl radical having from 3 to 20 carbon atoms;
- R" independently represents an organic or inorganic radical, different from cyclopentadienyl or cyclopentadienyl substituted, of an anionic nature and bound to the metal M,
- the groups R₁, R₂, R₃, R₄ and R₅ each independently represent atoms or radicals bound to a first cyclopentadienyl group coordinated to the metal M, and are selected from hydrogen or any other suitable organic or inorganic substituent of said cyclopentadienyl group;
- R₆ represents any suitable organic or inorganic group of an anionic nature, bound to the metal M and comprising from 1 to 20 non-metallic atoms different from hydrogen and further at least one atom selected from N, P, O or S, or a second cyclopentadienyl group, bound to the metal M;
characterized in that at least two, preferably at least three, of said R₁, R₂, R₃, R₄ and R₅ groups are independently selected from alkyl or aryl groups having from 1 to 20 carbon atoms, and said radical R₁ in formula (I) is substituted by a covalent bond with said R₆ group to form a bridged structure comprising the metal M.
A second object of the present invention relates to cyclopentadienyl complex of a transition metal, having the following formula (Ib) : 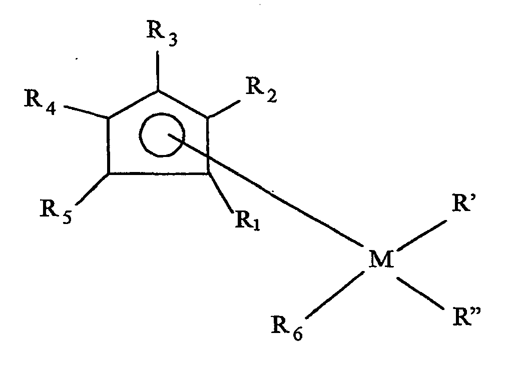 wherein:
- M is a metal selected from titanium, zirconium or hafnium, preferably titanium and zirconium;
- R' represents an allyl radical having from 3 to 20 carbon atoms;
- R" independently represents an organic or inorganic radical, different from cyclopentadienyl or substituted cyclopentadienyl, of an anionic nature and bound to the metal M,
- the groups R₁, R₂, R₃, R₄ and R₅ each independently represent atoms or radicals bound to a first cyclopentadienyl group coordinated to the metal M, and are selected from hydrogen or any other suitable organic or inorganic substituent of said cyclopentadienyl group;
- R₆ represents a second cyclopentadienyl group, bound to the metal M and comprising from 1 to 20 non-metallic atoms different from hydrogen;
characterized in that said first and second cyclopentadienyl groups are both tetrahydroindenyl groups.
A further object of the present invention relates to a catalytic composition for the (co)polymerization of α-olefins, comprising the following two components in contact with each other:
(i) at least one cyclopentadienyl complex of a transition metal, having the following formula (I'): 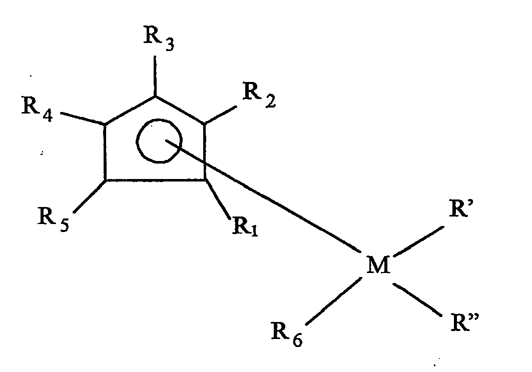 wherein:
   - M is a metal selected from titanium, zirconium or hafnium, preferably titanium and zirconium;
   - R' represents an allyl radical having from 3 to 20 carbon atoms;
   - R" independently represents an organic or inorganic radical, different from cyclopentadienyl or substituted cyclopentadienyl, of an anionic nature and bound to the metal M,
   - the groups R₁, R₂, R₃, R₄ and R₅ each independently represent atoms or radicals bound to a first cyclopentadienyl group coordinated to the metal M, and are selected from hydrogen or any other suitable organic or inorganic substituent of said cyclopentadienyl group;
   - R₆ represents any suitable organic or inorganic group of an anionic nature, bound to the metal M and comprising from 1 to 20 non-metallic atoms different from hydrogen;
   characterized in that at least two, preferably at least three, of said R₁, R₂, R₃, R₄ and R₅ groups are independently selected from alkyl or aryl groups having from 1 to 20 carbon atoms, and
(ii) an ionizing activator consisting of at least one organic or organometallic compound capable of forming a positive charge on said allyl-metallocene complex by the extraction of an allyl anion and the formation of a non-coordinating anion having a delocalized ionic charge, said ionizing activators being selected among oxygenated organometallic compounds, non coordinating ionic organometallic compounds, non-coordinating Lewis acids and polyfluorinated cyclopentadienyl compounds, with the proviso that said composition is not bis-(η⁵⁻pentamethylcyclopentadienyl)-η³-allylzirconium tetraphenylborate [(C₅(CH₃)₅)₂Zr(η³-C₃H₅)]⁺[B(C₆H₅)₄]⁻.

A further object of the present invention relates to a process for the (co)polymerization of α-olefins with the help of said catalytic composition.

Other possible objects of the present invention will appear evident from the following description and examples.

The term "(co)polymerization of α-olefins" as used in the following text and claims refers both to the homopolymerization and copolymerization of α-olefins with each other or with a different ethylenically unsaturated compound polymerizable therewith.

The term "suitable" as used in the text and claims with reference to groups, radicals and substituents in the formulae of organic and organometallic compounds, refers to those groups, radicals and substituents which are compatible with the stability characteristics of said compounds in the pure state, i.e. presumably inert on the basis of the generally known chemical properties of the different parts of the molecule in question.

The complex having formula (Ia), (Ib) or (I') according to the present invention is a substituted allyl-metallocene complex of a metal of group 4 of the periodic table, and is characterized both by an improved stability in solution or in the pure state, and also by a particular reactivity during the formation of catalytic compositions suitable for promoting (co)polymerization processes of α-olefins, and particularly of ethylene.

In accordance with the above definition of the complex having formula (Ia) (Ib) or (I'), the metal M can be titanium, zirconium or hafnium, zirconium being preferred.

The radical R' bound to the metal M in formula (Ia), (Ib) or (I') represents an allyl group having from 3 to 20 carbon atoms. These allyl groups are known in organic and organometallic chemistry, and their compounds with almost all existing metals are described in literature. On the contrary, no metal-allyl compound comprising cyclopentadienyl groups coordinated and substituted with at least two hydrocarbon groups, is known, as far as the Applicant is aware.

R' allyl groups according to the present invention comprise the basic structure M-C-C=C in which a carbon atom is bound to the metal M and to an ethylenically unsaturated group. These allyl groups can have from 3 to 20 carbon atoms and, in the more general embodiment, can also comprise non-metals different from hydrogen and carbon such as, for example, halogens, especially fluorine and chlorine, silicon and germanium. Allyl groups substituted with aromatics are also included in the above definition of R'.

R' allyl groups according to the present invention are, for example, allyl, methallyl, 1-phenylallyl, 3-phenylallyl, 3-(pentafluorophenyl) allyl, perfluoroallyl, but-2-enyl, pent-2-enyl, 3,3-dimethylallyl, cyclohexenylmethyl, 2-cyclopentylenethyl, 3-triethylsilylallyl. The complexes having formula (Ia), (Ib) or (I') wherein R' is allyl, methallyl and perfluoroallyl are preferred for the simplicity of their structure and preparation.

The R" group in the complexes having formula (Ia), (Ib) or (I') represents, according to the present invention, a general monovalent substituent bound to the metal M. Said R" group can have any of the known general and specific meanings attributed to it in specialized literature in the field. It can therefore be organic or inorganic, of a more or less anionic nature depending on the relative electro-negativity of its constituent atoms. A second chain-end of the R" group can also be bound to the R' group having formula (I) by means of a covalent bond, forming as a whole a divalent group bound to the metal M and forming a cyclic structure therewith.

Non-limiting examples of groups of substituents which can be represented by R" are hydrogen, halogen, such as chlorine or bromine, a C₁-C₂₀ alkyl or alkylaryl group, a C₃-C₂₀ allyl group, a C₃-C₂₀ alkylsilyl group, a C₅-C₂₀ cycloalkyl group, a C₆-C₂₀ aryl or arylalkyl group, a C₁-C₂₀ alkoxyl or thioalkoxyl group, a C₂-C₂₀ carboxylate or carbamate group, a C₂-C₂₀ dialkylamide group and a C₄-C₂₀ alkylsilylamide group. Typical examples of R" are hydride, halide, preferably chloride or bromide, a linear or branched alkyl group such as methyl, ethyl, butyl, isopropyl, isoamyl, octyl, decyl, benzyl, an alkylsilyl group such as, for example, trimethylsilyl, triethylsilyl or tributylsilyl, a cycloalkyl group such as cyclopentyl, cyclohexyl, 4-methylcyclohexyl, an aryl group such as phenyl or toluyl, an alkoxyl or thioalkoxyl group such as methoxyl, ethoxyl, iso- or sec-butoxyl, ethylsulfide, a carboxylate group such as acetate, trifluoroacetate, propionate, butyrate, pivalate, stearate, benzoate, or again, a dialkylamide group such as diethylamide, dibutylamide, or alkylsilyl-amide, such as bis (trimethylsilyl) amide or ethyltrimethylsilylamide.

According to a preferred aspect of the present invention, the R" group is an allyl group having from 3 to 20 carbon atoms, analogously to what is defined above for the R' group, and is more preferably equal to R'.

Each of the R₁, R₂, R₃, R₄ and R₅ radicals, bound to a first cyclopentadienyl group in the complex having formula (Ia), (Ib) or (I'), can be independently H, halogen or any hydrocarbon group, if necessary substituted with suitable heteroatoms, having from 1 to 20 carbon atoms. Furthermore, analogously to what is already known in literature for other cyclopentadienyl complexes of metals of group 4 of the periodic table, two or even more of said radicals having a suitable structure, adjacent to each other on the same cyclopentadienyl ring, can be bound to each other to give a cyclic or also polycyclic structure, saturated, unsaturated or aromatic, having at least one common bond ("condensed", according to the term normally used) with said cyclopentadienyl ring. Non-limiting examples of said condensed cyclic structures according to the present invention are 4,5,6,7-tetrahydroindenyl, 1,3-dimethyl-4,5,6,7-tetrahydroindenyl, 1,2,3-trimethylindenyl, octahydrofluorenyl groups, benzocycloalkylpentadienyl groups described in Italian patent application MI00A000680.

In addition, according to the present invention, the radical R₁ in the complex having formula (Ia), (Ib) or (I') can be substituted by a covalent bond with said R₆ group to form a so-called "bridged" cyclic structure, according to the terminology currently used in the field, which also comprises said metal M in the cycle.

According to the present invention however, it is critical for at least two of said groups R₁ to R₅ to be selected from saturated alkyl or aryl groups having from 1 to 20, preferably from 1 to 10, carbon atoms. These substituent groups can be single monovalent groups, for example, methyl, ethyl, benzyl, cyclohexyl, butyl, isobutyl, phenyl, or groups joined to each other to form cyclic structures, as is the case, for example, with the -(CH₂)₄- group in tetrahydroindenyl metallocene complexes. Also included in the definition of alkyl or aryl substituents according to the present invention are "bridged" groups having a suitable structure. Saturated alkyl groups having from 1 to 10 carbon atoms, optionally included in said condensed or bridged cyclic structures, are however preferred.

Said R₆ group having formula (Ia), (Ib) or (I') according to the present invention, represents, in its more general form, an organic or inorganic group of an anionic nature containing from 1 to 20 atoms different from hydrogen. R₆ can therefore be, for example, a halogen or an alkyl, aryl, alkoxy, aryloxy, amine, amide or carboxy group. More advantageous results have been observed however when said R₆ comprises at least one atom selected from N, P, O or S, or a second cyclopentadienyl group, bound to the metal M, and can be optionally bound by means of a covalent bond to said first cyclopentadienyl group in substitution of the R₁ group.

In its preferred form, R₆ represents, for example, any amide group having the formula R₇R₈N-, phosphide group having the formula R₇R₈P-, oxy group having the formula R₇O-, thio group having the formula R₇S-, or a second cyclopentadienyl group having the following formula (II): 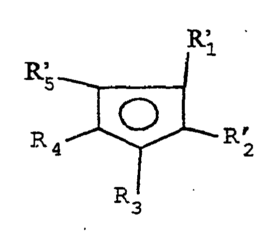 wherein each of the different R'₁, R'₂, R'₃, R'₄, R'₅, R₇ and R₈ groups is independently selected from hydrogen or any alkyl, aryl or silyl radical having from 1 to 20, preferably from 1 to 10, carbon atoms, and optionally containing one or more heteroatoms selected from halogen, oxygen, sulfur, silicon or germanium, or any two of said groups, suitably close to each other, can be bound by means of a covalent bond to form a cyclic structure, and in addition, an R₇ group or an R'₁ group of the cyclopentadienyl group having formula (II) can be bound if necessary to said first cyclopentadienyl group by means of a covalent bond in substitution of the R₁ group, to form a so-called "bridged", according to the terminology currently used, cyclic structure, which also comprises said metallic atom M having formula (Ia), (Ib) or (I') in the cycle.

Said "bridged" structure generally has from 1 to 20 carbon atoms and may also comprise heteroatoms such as Si or Ge substituted with 2 alkyl radicals. Typical bridged structures known in the art are methylene, dimethylsilylene, 1,2-ethylene, 1,4-butylene, xylylene, etc.

Non-limiting examples of R'₁, R'₂, R'₃, R'₄, R'₅, R₇ and R₈ groups are hydrogen, methyl, ethyl, propyl, isopropyl, butyl, sec-butyl, isobutyl, ter-butyl, hexyl, 2-ethylbutyl, octyl, decyl, dodecyl, hexadecyl, octadecyl, cyclohexyl, methylcyclohexyl, ethylcyclohexyl, 2,4,6-trimethylcyclohexyl, octylcyclohexyl, phenyl, methylphenyl, ethylphenyl, diphenyl, 2,4,6-trimethylphenyl, octylphenyl, benzyl, 4-methylbenzyl, diphenylmethyl, trifluoromethyl, perfluoroethyl, pentafluorophenyl, 3,4,5-trifluorophenyl, dichlorophenyl, chlorofluorophenyl, trichloromethyl, 2-methoxyethyl, 2-trifluoromethyloxyethyl, 4-methoxyphenyl and 4-ethoxyphenyl, trimethylsilyl, triethylsilyl.

If, in particular, R₇ or R'₁ form a bridged structure with said first cyclopentadienyl group, they consist of divalent alkyl groups, optionally also comprising heteroatoms suitably bound, such as those mentioned above. Typical but non-limiting examples of these groups are methylene, 1,2-ethylene, 1,3-propylene, 1,4-butylene, 1,4-but-2-enylene, dimethylsilylene, diethylsilylene, 1,2-tetramethyldisilylene, 1,2-xylylene, 1,3-xylylene, 1,2-xylyldimethylene, dimethylgermylene, 1,3-cyclohexylene.

According to a preferred aspect of the present invention, said R₆ group of the complex having formula (Ia), (Ib) or (I') is a second cyclopentadienyl group having formula (II) wherein at least two, and more advantageously at least three, of said substituent groups R'₁, R'₂, R'₃, R'₄ and R'₅ are hydrocarbon, more preferably alkyl, groups.

Particularly preferred complexes for the simplicity of their preparation, according to the present invention, are complexes having formula (Ia), (Ib) or (I') in which said first and said second cyclopentadienyl group are the same and are substituted with at least two hydrocarbon, preferably alkyl, groups having from 1 to 20, preferably from 1 to 10, carbon atoms, as defined above. Among these, bis(tetrahydroindenyl) complexes, optionally alkylsubstituted on the cyclopentadienyl ring, or joined to each other by means of a divalent "bridged" group, as described above, have been found to be-even more advantageous for the purposes of the present invention.

Non-limiting examples of complexes having formula (Ia), (Ib) or (I') according to the present invention are listed below: bis-(tetramethylcyclopentadienyl)diallylzirconium bis-(tetramethylcyclopentadienyl)allylzirconium chloride ethylene bis-(tetrahydroindenyl)diallylzirconium ethylene bis-(tetrahydroindenyl)dimethallylzirconium methylene bis- (tetrahydroindenyl) diallylzirconium isopropyl bis-(tetrahydroindenyl) diallylzirconium dimethylsilyl bis-(tetrahydroindenyl) diallylzirconium dimethylgermyl- bis-(tetrahydroindenyl)diallylzirconium bis-bicyclo-[5.3.0]-decadienyldiallylzirconium bis-bicyclo-[6.3.0]-undecadienyldiallylzirconium bis-bicyclo-[10.3.0]-pentadecadienyldiallylzirconium bis-9-methylbicyclo-[5.3.0]-decadienyldiallylzirconium [dimethylsilyl-bis-9-bicyclo-[5.3.0]-decadienyl]diallylzirconium.

Also included in the scope of the present invention is any mixture or composition comprising at least one of said complexes having formula (I), and, in particular, any mixture of two or more of said complexes having formula (I).

The allyl-metallocene complexes according to the present invention can be prepared by means of techniques known in the art, as described for example in the above article in "J. Organometal. Chem." or in "Angewandte Chemie, Int. Ed., 5(2), 151-266 (1966) ".

It is generally sufficient to react, under suitable conditions of atmosphere and inert solvents, a suitable metallocene halide precursor, essentially corresponding to the desired complex having formula (Ia), (Ib) or (I'), in which at least one group selected from said groups R' or R" is, for example, chorine or bromine, with a suitable metal allyl, such as, for example, a lithiumallyl or, even better a magnesium allyl chloride. In particular cases, however, experts in the field may select other methods among those known in organometallic synthesis for obtaining allyl-metallocenes, without there being any novelty. Attention should be paid however to the greater simplicity of the synthesis of the allyl-metallocene complexes claimed herein, in addition to the higher yield (normally over 60%) with respect to analogous alkyl, and particularly methyl, complexes.

The complexes according to the present invention are surprisingly stable over a period of time even at room temperature or higher, with respect to other allyl-metallocene complexes which do not comprise an adequately substituted cyclopentadienyl group, such as for example, bis-indenyldiallylzirconium, 1,2-ethylenebis(1-indenyl)diallylzirconium and biscyclopentadienyldiallylzirconium. The latter in fact rapidly degrade in a solution of toluene or cyclohexane at room temperature, with the formation of propylene and a blackish residue not characterized. The obvious problems relating to conservation over a period of time are therefore solved, whereas they represent a serious drawback in the use of the alkyl-metallocene complexes known in the art.

The above complexes having formula (I') have also proved to be particularly advantageous in the formation of compositions having excellent catalytic activity in the polymerization of olefins. In particular, they allow catalytic compositions to be prepared by reaction with ionizing activators known in the art, without the addition of aluminumalkyls, as organometallic co-activators, thus drastically reducing the quantity of metallic residues present in the olefinic polymer obtained at the end of the process.

A further aspect of the present invention therefore relates to a catalytic composition for the (co)polymerization of α-olefins comprising at least the following two components:
(i) at least one allyl-metallocene complex having formula (I'), and
(ii) an ionizing activator consisting of at least one organic or organometallic compound capable of forming a positive charge on said allyl-metallocene complex by the extraction of an allyl anion and the formation of a non-coordinating anion having a delocalized ionic charge.

Said ionizing activators forming component (ii) are generally known in the art and can be divided into four main categories: I) oxygenated organometallic compounds, II) non-coordinating ionic organometallic compounds, III) non-coordinating Lewis acids and IV) polyfluorinated cyclopentadienyl compounds. Compounds of type II), III) and particularly IV) are preferred.

Type I) compounds according to the present invention are oligomeric or polymeric organo-oxygenated derivatives of aluminum, gallium or tin. In these compounds there are at least two atoms of a metal selected from Al, Ga and Sn, which are each bound to an oxygen atom and at least one hydrocarbyl group, preferably an alkyl group having from 1 to 6 carbon atoms, preferably methyl.

According to this aspect of the invention, component (ii) is more preferably a polymeric aluminoxane. As is known, aluminoxanes are compounds containing Al-O-Al bonds, with a varying O/Al ratio, obtained in the art by reaction, under controlled conditions, of an aluminum alkyl, or aluminum alkyl halide, with water or other compounds containing pre-determined quantities of water available, as for example, in the case of the reaction of aluminum trimethyl with aluminum sulfate hexahydrate, copper sulfate pentahydrate or iron sulfate pentahydrate. Aluminoxanes which are preferably used for the formation of the polymerization catalyst of the present invention are cyclic and/or linear, oligo- or polymeric compounds, characterized by the presence of repetitive units having the following formula (III): 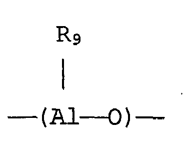 wherein R₉ is a C₁-C₆ alkyl group, preferably methyl.

Each aluminoxane molecule preferably contains from 4 to 70 repetitive units which are not necessarily all the same, but may contain different R₉ groups.

Said aluminoxanes, and particularly methylaluminoxane (MAO), are compounds which can be obtained with known organometallic chemical processes, for example by the addition of aluminum trimethyl to a suspension in hexane of aluminum sulfate hydrate.

When used for the formation of a polymerization catalyst according to the present invention, the aluminoxanes are put in contact with a complex having formula (I) in such proportions that the atomic ratio between Al and the metal M is within the range of 10 to 10,000 and preferably from 100 to 5,000. The sequence with which the allyl-metallocene complex in component (i) and the aluminoxane (ii) are put in contact with each other, is not particularly critical.

In addition to the above aluminoxanes, the definition of component (ii) according to the present invention also comprises galloxanes (in which, in the previous formulae, gallium is present instead of aluminum) and stannoxanes, whose use as cocatalysts for the polymerization of olefins in the presence of metallocene complexes is known, for example, from patents US 5,128,295 and US 5,258,475.

Type II) compounds which can be used as activators according to the present invention are ionic organometallic compounds of a metal M' selected from boron, aluminum or gallium, and preferably boron, consisting of a cation capable of reacting with the complex having formula (I') extracting an allyl group therefrom to form one or more stable and non-reactive compounds, preferably neutral, and also of an organic non-coordinating anion containing the metal M', whose negative charge is delocalized on a multicentric structure.

Components (ii) suitable as ionizing systems of the above type II) are preferably selected from voluminous organic compounds of boron and aluminum, such as for example, those represented by the following general formulae: [(R_{c})xNH₄₋ₓ]⁺•[B(R_{D})₄]⁻; [Ph₃C]⁺•[B(R_{D})₄]⁻; [(R_{c})₃PH]⁺•[B(R_{D})₄]⁻; [Li]⁺•[B(R_{D})₄]⁻; [Li]⁺•[Al(R_{D})₄]⁻;
wherein the deponent "x" is an integer ranging from 0 to 3, each R_{c} group independently represents an alkyl or aryl radical having from 1 to 10 carbon atoms and each R_{D} group independently represents an aryl radical partially or, preferably, totally fluorinated, having from 6 to 20 carbon atoms.

Said compounds of type II) are generally used in such quantities that the ratio between the atom M' in component (ii) and the atom M in the allyl-metallocene complex having formula (I) is within the range of 0.1 to 15, preferably from 0.5 to 10, more preferably from 1 to 6.

Type III) compounds are strong organic Lewis acids such as arylderivatives of boron and aluminum, preferably fluorinated on the aromatic rings, such as, for example, tris(pentafluorophenyl)boron. According to the present invention, said type III) compounds, when used in a more or less stoichiometric quantity or in slight excess, react with the metallocene having formula (II) extracting an allyl anion and forming on the one hand the desired metallocene cation and, on the other, a voluminous and non-coordinating anion, with delocalization of the negative charge.

Examples of ionizing compounds of type II) or III) which can be used as component (ii) in the catalytic compositions according to the present invention, are widely described in the art, combined with various metallocene complexes, for example, in the following patent publications, whose contents are herein incorporated as reference:
-- European patent applications published with the Nr.: EP-A 277.003, EP-A 277.004, EP-A 522,581, EP-A 495,375, EP-A 520,732, EP-A 478,913, EP-A 468,651, EP-A 427,697, EP-A 421,659, EP-A 418,044;
-- international patent applications published with the Nr.: WO 92/00333, WO 92/05208, WO 91/09882;
-- U.S. patents 5,064,802, 2,827,446, 5, 066, 739.

Type IV) activator compounds which can be used for the purposes of the present invention are certain fluorinated organic compounds, comprising at least one di-unsaturated cycle with 5 or 6 carbon atoms, having the following formula (IV): 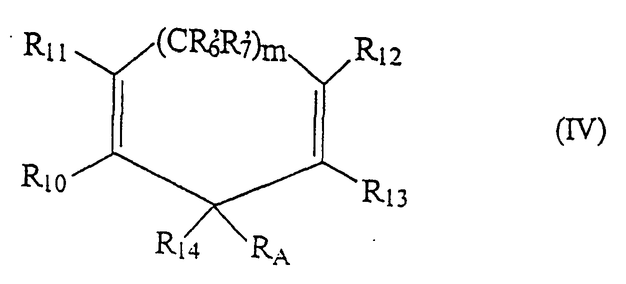 wherein:
- each Rᵢ (with "i" being an integer from 10 to 14), R'₆ and R'₇ group is a substituent of the di-unsaturated cycle independently selected from hydrogen, fluorine and an aliphatic or aromatic, fluorinated or non-fluorinated hydrocarbyl group, having from 1 to 20 carbon atoms, optionally joined to a different Rᵢ hydrocarbyl group adjacent thereto forming a further condensed cycle with said di-unsaturated cycle, on the condition that at least three, preferably at least four, of the groups R₁₀, R₁₁, R₁₂, R₁₃ R'₆ or R'₇ are independently selected from the group consisting of:
   - fluorine, or
   - a fluorinated alkyl group having the formula -CF(R'₈R'₉), wherein each R'₈ or R'₉ group can have any of the above meanings of the Rᵢ groups and at least one of these is fluorine, or fluorinated alkyl at least in position 1, or a fluorinated aryl Ar_{F} as defined below, or a fluorinated vinyl group V_{F} as defined below, or
   - a fluorinated aryl Ar_{F} group substituted on the aromatic ring with at least two groups selected from fluorine, a -CF(R'₈R'₉) group as defined above or a different Ar_{F} group or
   - a fluorinated vinyl group V_{F} substituted on at least two positions of the double bond with groups selected from fluorine, a -CF(R'₈R'₉) group or an Ar_{F} group as defined above;
- the R_{A} group is hydrogen, -OH, -SH, or it forms, together with said R₁₄ group, a carbonyl oxygen, but is preferably hydrogen; and
- "m" can have the values of 1 or 0, and more specifically, is 1 when said -CR'₆R'₇- group is present and said di-unsaturated cycle comprises 6 carbon atoms, whereas it is 0 in the preferred case wherein said -CR'₆R'₇- group is substituted by a covalent bond and said di-unsaturated cycle comprises 5 carbon atoms.

Particularly preferred as type IV) activators are fluorinated fluorenyl included in the previous formula (IV), having the following formula (V): 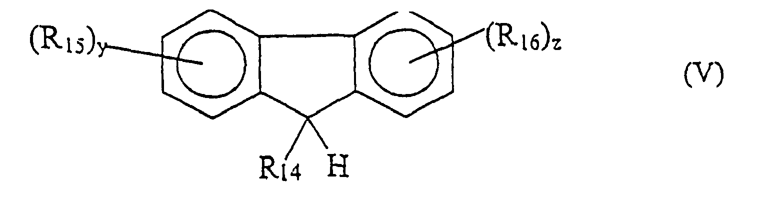 wherein:
R₁₄ has the same meaning defined for the compounds having formula (IV);
(y) is an integer from 1 to 4;
(z) is an integer from 1 to 4;
the groups R₁₅ and R₁₆ are if necessary, independently substituents of each hydrogen atom of the respective aromatic ring in one or more of the four positions available, and are selected from fluorine or an aliphatic or aromatic, fluorinate or non-fluorinated hydrocarbyl group having from 1 to 20 carbon atoms, optionally joined to a different R₁₅ hydrocarbyl group or, respectively, R₁₆ to form a further cycle,
on the condition that at least 3, preferably at least 4, of said groups R₄, R₁₅ and R₁₆, are independently selected from the group consisting of:
   - fluorine, or
   - a fluorinated alkyl group having the formula
   - CF(R'₈R'₉), wherein each R'₈ or R'₉ group can have any of the above meanings of the Rᵢ groups and at least one of them is fluorine, or fluorinated alkyl at least in position 1, or a fluorinated aryl Ar_{F} as defined below, or a fluorinated vinyl group V_{F} as defined below, or
   - a fluorinated aryl Ar_{F} group substituted on the aromatic ring with at least two groups selected from fluorine, a -CF(R'₈R'₉) group as defined above or a different Ar_{F} group or
   - a fluorinated vinyl group V_{F} substituted on at least two positions of the double bond with groups selected from fluorine, a -CF(R'₈R'₉) group or an Ar_{F} group as defined above.

In a preferred embodiment, in the compounds having formula (V), all the eight R₁₅ and R₁₆ groups are the same and are trifluoromethyl, or even more preferably fluorine.

The above compounds having formula (IV) and those more preferred having formula (V), together with the relative preparation methods and their use as ionizing activators in catalytic compositions for the polymerization of α-olefins, are widely described in the European patent application published with the number 1,013,675, whose contents are herein integrally incorporated as reference.

According to the present invention, the above activators consisting of type IV) compounds are advantageously added to the catalytic composition in a molar ratio ranging from 1 to 10, preferably from 1.1 to 5, with respect to the moles of the allyl-metallocene complex having formula (I').

Non-limiting examples of catalytic compositions according to the present invention are listed hereunder:
- bis-(tetramethylcyclopentadienyl)diallylzirconium/-1,2,3,4,5,6,7,8-octafluoro-9-(pentafluorophenyl)fluorene
- bis-(tetramethylcyclopentadienyl)diallylzirconium/methylalumoxane
- bis-(tetramethylcyclopentadienyl)diallylzirconium/-B(C₆F₅)₄CPh₃
- bis-(tetramethylcyclopentadienyl)diallylzirconium/-1,2,3,4,5,6,7,8-octafluoro-fluorene
- bis-(tetramethylcyclopentadienyl)diallylzirconium/-B(C₆F₅)₃
- bis-(tetramethylcyclopentadienyl)diallylzirconium/-1,2,3,4,5,6,7,8-octafluoro-9-hydroxy-9-(pentafluorophenyl)fluorene
- bis-(pentamethylcyclopentadienyl)diallylzirconium/-1,2,3,4,5,6,7,8-octafluoro-9-(pentafluorophenyl)fluorene
- bis-(pentamethylcyclopentadienyl)diallylzirconium/methylalumoxane
- bis-(pentamethylcyclopentadienyl)diallylzirconium/-B(C₆F₅)₄CPh₃
- bis-(pentamethylcyclopentadienyl)diallylzirconium/-1,2,3,4,5,6,7,8-octafluoro-fluorene
- bis-(pentamethylcyclopentadienyl)diallylzirconium/-B(C₆F₅)₃
- bis-(pentamethylcyclopentadienyl)diallylzirconium/-1,2,3,4,5,6,7,8-octafluoro-9-hydroxy-9-(pentafluorophenyl)fluorene
- bis-(pentamethylcyclopentadienyl)diallylzirconium/-9,9'-bis(9H-fluorene)1,1',2,2',3,3',4,4',5,5',6,6', 7,7',8,8'-hexa-decafluorine
- Ethyl-bis-(tetramethylcyclopentadienyl)allylzirconium chloride/Methylalumoxane
- ethylene bis-(tetrahydroindenyl)diallylzirconium/1,-2,3,4,5,6,7,8-octafluoro-9-(pentafluorophenyl)fluorene
- ethylene bis-(tetrahydroindenyl)diallylzirconium/methylalumoxane
- ethylene bis-(tetrahydroindenyl)diallylzirconium/-B(C₆F₅)₄CPh₃
- ethylene bis-(tetrahydroindenyl)diallylzirconium/1,2,-3,4,5,6,7,8-octafluoro-fluorene
- ethylene bis-(tetrahydroindenyl)diallylzirconium/1,2,-3,4,5,6,7,8-octafluoro-9-hydroxy-9- (pentafluorophenyl)fluorene
- ethylene bis-(tetrahydroindenyl)diallylzirconium/9,9'-bis(9H-fluorene)1,1',2,2',3,3',4,4',5,5',6,6',7,7', 8,8'-hexa-decafluorine
- ethylene bis-(tetrahydroindenyl)dimethylallylzirconium/-1,2,3,4,5,6,7,8-octafluoro-9-(pentafluorophenyl) fluorine
- ethylene bis-(tetrahydroindenyl)dimethylallylzirconium/methylalumoxane
- ethylene bis-(tetrahydroindenyl)dimethylallylzirconium/B(C₆F₅)₄CPh₃
- ethylene bis-(tetrahydroindenyl)dimethylallylzirconium/1,2,3,4,5,6,7,8-octafluoro-fluorene
- ethylene bis-(tetrahydroindenyl)dimethylallylzirconium/-1,2,3,4,5,6,7,8-octafluoro-9-hydroxy-9-(pentafluorophenyl)fluorene
- ethylene bis-(tetrahydroindenyl)dimethylallylzirconium/9,9'-bis(9H-fluorene)1,1',2,2',3,3',4,4',5,5',6,6',7,7',8,8'-hexadecafluorine
- dimethylsilyl bis-(tetrahydroindenyl)diallylzirconium/-1,2,3,4,5,6,7,8-octafluoro-9-(pentafluorophenyl)fluorene
- dimethylsilyl bis-(tetrahydroindenyl)diallylzirconium/methylalumoxane
- dimethylsilyl bis-(tetrahydroindenyl)diallylzirconium/B(C₆F₅)₄CPh₃
- dimethylsilyl bis-(tetrahydroindenyl)diallylzirconium/1,2,3,4,5,6,7,8-octafluoro-fluorene
- dimethylsilyl bis-(tetrahydroindenyl)diallylzirconium/1,2,3,4,5,6,7,8-octafluoro-9-hydroxy-9-(pentafluorophenyl)fluorene
- dimethylsilyl bis-(tetrahydroindenyl)diallylzirconium/9,9'-bis(9H-fluorene)1,1',2,2',3,3',4,4'5,5',6,6',7,7',8,8'-hexadecafluorine
- bis-bicyclo-[5.3.0]-decadienyldiallylzirconium/1,2,3,4,5,6,7,8-octafluoro-9-(pentafluorophenyl)-fluorene
- bis-bicyclo-[5.3.0]-decadienyldiallylzirconium/methylalumoxane
- bis-bicyclo-[5.3.0]-decadienyldiallylzirconium/B(C₆F₅)₄CPh₃
- bis-bicyclo-[5.3.0]-decadienyldiallylzirconium/1,2,3,-4,5,6,7,8-octafluoro-fluorene
- bis-bicyclo-[5.3.0]-decadienyldiallylzirconium/1,2,3,-4,5,6,-7,8-octafluoro-9-hydroxy-9-(pentafluorophenyl) fluorene
- bis-bicyclo-[5.3.0]-decadienyldiallylzirconium/9,9'-bis(9H-fluorene)1,1',2,2',3,3',4,4',5,5',6,6',7,7', 8,8'-hexa-decafluorine.

According to a particular aspect of the present invention, in order to product heterogeneous catalytic compositions with respect to the polymerization medium of α-olefins, for example for use in polymerization in gas phase, the above components (i) and (ii) can also be supported on inert solids, preferably consisting of oxides of Si and/or Al, such as for example, silica, alumina or silico-aluminates, but if necessary also of a polymeric nature, such as certain known polystyrenes functionalized for the purpose. For the supporting of said components, the known supporting techniques can be used, normally comprising contact, in a suitable inert liquid medium, between the carrier, optionally activated by heating to temperatures exceeding 200°C, and one or both of components (i) and (ii) of the catalyst of the present invention. For the purposes of the present invention, it is not necessary for both components to be supported, as it is also possible for only the complex having formula (I'), the ionizing component (ii) or the whole catalytic composition to be present on the surface of the carrier.

Also included in the scope of the present invention are the complexes and catalytic compositions based on these, which have been supported on a solid by means of the "functionalization" of the latter and formation of a covalent bond between the solid and an allyl-metallocene complex included in the previous formula (Ia), (Ib) or (I').

In addition to the two components (i) and (ii), one or more other additives or components can be optionally added to the catalytic composition of the present invention, according to what is known in normal practice for the polymerization of olefins, to obtain a catalytic system suitable for satisfying specific requisites. The catalytic systems thus obtained should be considered as being included in the scope of the present invention. Additives or components which can be included in the preparation and/or formulation of the catalytic composition of the present invention are inert solvents such as, for example, aliphatic and/or aromatic hydrocarbons, weakly coordinating additives selected, for example, from non-polymerizable olefins or particular fluorinated ethers, halogenating agents such as silicon halides, halogenated hydrocarbons, preferably chlorinated, and the like, and again all other possible components normally used in the art for the preparation of traditional homogeneous catalysts of the metallocene type for the (co)polymerization of α-olefins.

Components (i) and (ii) form the catalytic composition according to the present invention by contact with each other, preferably in an inert diluent and at temperatures ranging from room temperature to the temperature selected for the polymerization, which may also be, for certain processes, 150°C or higher, and for times varying from 10 seconds to 1 hour, more preferably from 1 to 30 minutes. Inert diluents suitable for the purpose are, for example, aliphatic and aromatic hydrocarbons, preferably liquid at room temperature.

The catalytic composition according to the present invention can be used with excellent results in substantially all known (co)polymerization processes of α-olefins, either in continuous or batchwise, in one or more steps, such as, for example, processes at low (0.1-1.0 MPa), medium (1.0-10 MPa) or high (10-150 MPa) pressure, at temperatures ranging from 20° to 240°C, optionally in the presence of an inert diluent. Hydrogen can be conveniently used as molecular weight regulator.

Typical α-olefins (co)polymerizable with the catalysts according to the present invention are aliphatic unsaturated hydrocarbons having from 2 to 30 carbon atoms, linear or branched, optionally substituted with one or more halogen atoms, such as fluorine or chlorine, whose molecule contains at least one unsaturated primary group (-CH=CH₂). Said unsaturated hydrocarbons may also comprise cyclic groups and/or one or more additional C=C unsaturations, chain-end or internal, conjugated or non-conjugated with said unsaturated primary group. Examples of these α-olefins comprise ethylene, propylene, styrene, 1-butene, 4-methylpent-1-ene, 1-hexene, 1-octene, 1-decene, 1-octadecene, 1,4-hexadiene, 1,3-butadiene, isoprene, ethylidene-norbornene. Ethylene is particularly preferred both in homopolymerization processes to obtain highly crystalline high density polyethylene, and in copolymerization processes with one or more other α-olefins or with non-conjugated dienes, to obtain low density polyethylene (also called LLDPE or VLDPE) or saturated olefinic rubbers (for example EPR) or unsaturated olefinic rubbers (for example EPDM) .

These processes can be carried out in solution or suspension in a liquid diluent normally consisting of an aliphatic or cycloaliphatic saturated hydrocarbon, having from 3 to 8 carbon atoms, but which can also consist of a monomer as, for example, in the known co-polymerization process of ethylene and propylene in liquid propylene. The quantity of catalyst introduced into the polymerization mixture is preferably selected so that the concentration of the transition metal M ranges from 10⁻⁵ to 10⁻⁸ moles/liter.

According to common use, small quantities, usually in concentrations of 10⁻³ and 10⁻⁴ moles/liter, in the reaction mixture, of aluminum trialkyls such as aluminum triethyl or aluminum triisobutyl (TIBAL) are added to the polymerization reactor as scavenger to eliminate any impurity which may poison the catalyst, for example traces of oxygen or humidity. These scavengers should in no way be considered as forming part of the catalytic composition according to the present invention.

Alternatively, the polymerization can be carried out in gas phase, for example, in a fluid bed reactor, normally at pressures ranging from 0.5 to 5 MPa and at temperatures ranging from 50 to 150°C.

According to a particular aspect of the present invention, the catalytic composition for the (co)polymerization of α-olefins is prepared separately (preformed) by contact of components (i) and (ii), and is subsequently introduced into the polymerization environment. The catalytic composition can be charged first into the polymerization reactor, followed by the reagent mixture containing the olefin or mixture of olefins to be polymerized, or the catalytic composition can be charged into the reactor already containing the reagent mixture or, finally, the reagent mixture and the catalytic composition can be contemporaneously fed into the reactor in a typical continuous process.

According to another aspect of the present invention, the catalyst is formed "in situ", for example by introducing the preformed components (i) and (ii) separately into the polymerization reactor containing the pre-selected olefinic monomers.

The catalysts according to the present invention can be used with excellent results in the polymerization of ethylene to give linear polyethylene and in the copolymerization of ethylene with propylene or higher α-olefins, preferably having from 4 to 10 carbon atoms, to give copolymers having different characteristics depending on the specific polymerization conditions and on the quantity and structure of the α-olefin. For example, linear polyethylenes can be obtained, with a density ranging from 0.880 to 0.940, and with molecular weights ranging from 10,000 to 2,000,000. The α-olefins preferably used as comonomers of ethylene in the production of low or medium density linear polyethylene (known with the abbreviations ULDPE, VLDPE and LLDPE, depending on the density), are propylene, 1-butene, 1-hexene and 1-octene.

The catalytic composition of the present invention can also be conveniently used in copolymerization processes of ethylene and propylene to give saturated elastomeric copolymers vulcanizable for example by means of peroxides and extremely resistant to aging and degradation, or in the terpolymerization of ethylene, propylene and a non-conjugated diene, having from 5 to 20 carbon atoms, to obtain vulcanizable rubbers of the EPDM type. In the case of these latter processes, it has been found that the catalysts of the present invention allow the production of polymers having a particularly high diene content and average molecular weight, under the polymerization conditions.

Preferred non-conjugated dienes for the purpose are, for example: 1,4-hexadiene and 1,6-octadiene; 5-methyl-1,4-hexadiene; 3,7-dimethyl-1,6-octadiene; 1,4-cyclohexadiene; 1,5-cyclo-octadiene; 5-methylene-2-norbornene, 5-ethylidene-2-norbornene (ENB) and their mixtures.

In the case of EPDM terpolymers, the quantity of diene monomer conveniently does not exceed 15% by weight, and preferably ranges from 2 to 10% by weight. The propylene content on the other hand conveniently ranges from 20 to 50% by weight.

The catalytic composition according to the present invention can also be used in homo- and co-polymerization processes of α-olefins different from ethylene, under the conditions normally used in the art for the corresponding polymerization processes with the known catalysts based on metallocenes, giving, with excellent yields, atactic, isotactic or syndiotactic polymers, depending on the structure and geometry of the activated metallocene complex. α-olefins suitable for the purpose are those having from 3 to 20, preferably from 3 to 10, carbon atoms, optionally substituted with halogen atoms or aromatic nuclei such as, for example, propylene, 1-butene, 1-hexene, 4-methyl-1-pentene, 1-decene and styrene.
The present invention is further described by the following examples, which, however, are provided for purely illustrative purposes and in no way limit the overall scope of the invention itself.

### EXAMPLES

The following analytical techniques and characterization methods were used in the embodiment of the examples which illustrate the invention.
- ¹H-NMR spectroscopy, for the characterization of the molecular structures of the complexes and olefinic polymers, by means of a nuclear magnetic resonance spectrometer mod. Bruker MSL-300, using CDCl₃ as solvent unless otherwise indicated.
- Gel-Permeation Chromatography (GPC), for determining the average molecular weights of the olefinic polymers Mn and Mw and the relative MWD distribution, by means of a WATERS 150-CV chromatograph, using a Waters differential refractometer as detector, eluating with 1,2,4-trichlorobenzene (stabilized with Santonox) at 135°C. A set was used of µ-Styragel HT columns (Waters) of which three with pore dimensions of 10³, 10⁴, 10⁵ Å respectively, and two with pore dimensions of 10⁶ Å, establishing a flow-rate of the eluant of 1 ml/min. The data were obtained and processed by means of Maxima 820 software version 3.30 (Millipore); the number (Mₙ) and weight (M_{w}) average molecular weight calculation was carried out by universal calibration, selecting polystyrene standards with molecular weights within the range of 6,500,000-2,000, for the calibration.

The reagents and solvents used in the embodiment of the following examples are pure commercial products, unless otherwise indicated. Before use, the solvents are subjected to drying or drying distillation according to the conventional methods. In particular, the following reagents were used:
- bis(tetramethylcyclopentadienyl)zirconiumdichloride of Witco, used as received
- bis-bicyclo[5.3.0]decadienylzirconium dichloride prepared according to the formulation specified in U.S. patent 5,900,517
- rac-ethylene-bis(4,5,6,7-tetrahydro-1-indenyl)-zirconiumdichloride of Witco, used as received
- rac-ethylene-bis-(1-indenyl) zirconiumdichloride of Witco, used as received

Unless otherwise indicated, all the synthesis reactions and operations preliminary to the polymerization processes, as well as the conservation and handling of the organometallic compounds, are effected in an inert atmosphere of nitrogen or argon depending on necessity.

### EXAMPLE 1: Preparation of bis(tetramethylcyclopentadienyl)-diallylzirconium (VI).

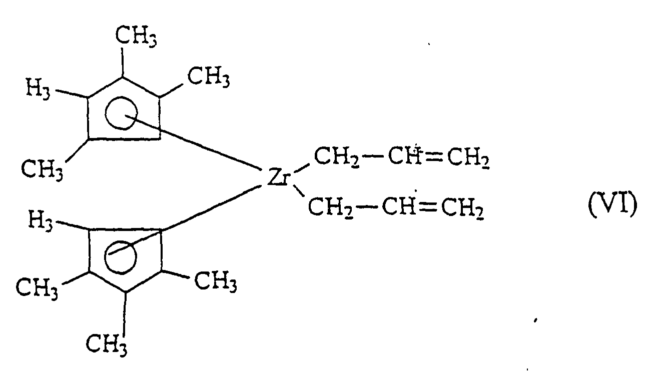

2.5 g (6.19 mmoles) of bis(tetramethylcyclopentadienyl)zirconium dichloride and 100 ml of anhydrous tetrahydrofuran (THF) are charged under argon into a tailed test-tube. The solution is cooled to -70°C and 15 ml of a 2M solution of allylmagnesium chloride in THF are added. The mixture is left to rise to room temperature. The solution is dried obtaining a residue to which 50 ml of anhydrous toluene are added; the mixture is dried to eliminate any traces of THF. The residue is extracted with 100 ml of anhydrous pentane at 30-40°C. The mixture is filtered and the solution is concentrated under vacuum to a volume of 10 ml and cooled to -50°C, obtaining a precipitate. The crystals are rapidly filtered and the solid is then dried under vacuum. 2 g of a crystalline solid are obtained which, after ¹HNMR characterization, proves to consist of the desired complex having formula (VI), with a yield of 77%.
¹HNMR (solvent C₆D₆): 5.6 ppm (quint, 2H); 5.0 ppm (s, 2H); 2.76 ppm (d, 8H); 1.68 ppm (s, 12H); 1.5 ppm (s, 12H).

### EXAMPLE 2: Preparation of bis(tetramethylcyclopentadienyl)-allylzirconiumchloride.

The same procedure is basically followed as described in the previous example 1, but using a molar ratio of about 1/1 between the two reagents. 2.5 ml of a 2M solution of allylmagnesium chloride in THF are added to 1.8 g (4.45 mmoles) of bis(tetramethylcyclopentadienyl)zirconiumdichloride, dissolved in 50 ml of anhydrous THF and cooled to -70°C. The solution is brought to room temperature and the solvent is evaporated to dryness obtaining a residue which is extracted with 50 ml of anhydrous pentane. The solution is concentrated under vacuum to a volume of 20 ml and cooled to -50°C obtaining a precipitate. The crystals are rapidly filtered and the solid is then dried under vacuum. 1.1 g of a solid are obtained which, after ¹HNMR characterization, proves to consist of the desired monoallyl complex (yield 60%). The product is stable for several days in solution, in the solid state it is stable at room temperature for an indefinite period.
¹HNMR (solvent C₆D₆): 6.16 ppm (quint, 1H); 5.25 ppm (s, 2H); 3.15 ppm (d, 4H); 1.91 ppm (s, 3H); 1.82 ppm (s, 3H); 1,77 ppm (s, 3H); 1.71 ppm (s, 3H).

### EXAMPLE 3: Preparation of rac-ethylene-bis(4,5,6,7-tetrahydro-1-indenyl)diallylzirconium (VII)

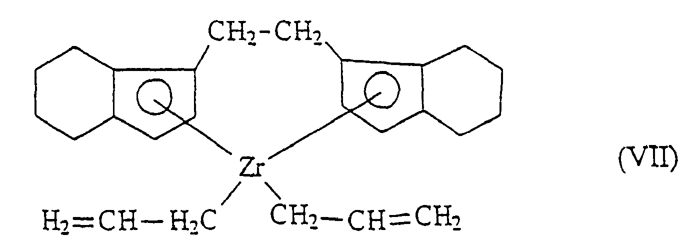

7 ml of a 2M solution of allylmagnesium chloride in THF are added to 2 g (5.0 mmoles) of rac-ethylene-bis-(4,5,6,7-tetrahydro-1-indenyl)zirconium dichloride, dissolved in 100 ml of anhydrous THF and cooled to -70°C. The mixture is left to rise to room temperature. The solution is dried obtaining a residue to which 100 ml of anhydrous toluene are added and which is dried again to eliminate any traces of THF. The residue is extracted with 100 ml of anhydrous pentane (twice). The mixture is filtered and the solution is concentrated under vacuum to a volume of 20-30 ml and cooled to -70°C, obtaining a solid precipitate. The mother liquor is decanted and the solid is then dried under vacuum. 2.08 g of a slightly yellow solid are obtained, which, after ¹HNMR characterization, proves to consist of the desired complex having formula (VII), (yield 98%). The product is stable at room temperature, in solution it is stable for several days.
¹HNMR (solvent C₆D₆): 5.6 ppm (quint, 2H) ; 5.16 ppm (d, 2H) ; 4.63 ppm (d, 2H); 2.98 ppm (d, 8H) ; 2.56 ppm (m, 6H); 2.31 ppm (m, 6H); 2.11 ppm (m, 4H); 1.9 ppm (m, 4H).

### EXAMPLE 4 (Comparative): Preparation of rac-ethylene-bis(1-indenyl)diallylzirconium

5 ml of a 2M solution of allylmagnesium chloride in THF are added to 1 g (2.38 mmoles) of rac-ethylene-bis(1-indenyl)zirconium dichloride, dissolved in 50 ml of anhydrous THF and cooled to -70°C. The temperature is left to rise to 0°C in three hours. The solution is dried by evaporating the solvent at 0°C. 50 ml of anhydrous toluene (cooled to 0°C) are added and the mixture is dried again to eliminate any traces of THF. The residue is extracted with a mixture of 50 ml of anhydrous pentane and 20 ml of anhydrous heptane. The mixture is filtered and the solution is concentrated under vacuum to a volume of 10 ml, the temperature being maintained at 0°C. The solid is filtered, washed with cold pentane and dried under vacuum. The product is conserved in a freezer. On effecting NMR analysis at room temperature the solution becomes turbid after a few minutes with the subsequent formation of brown precipitates. After a few hours the ¹HNMR spectrum reveals the disappearance of the diallyl product with the formation of propylene.
¹HNMR (solvent C₇D₈) : 7.4 ppm (doublet of doublet, 2H) ; 7 ppm (m, 4H); 6.6 ppm (d, 2H); 5.6 ppm (d, 2H) ; 5. 3 ppm (q, 2H); 4.9 ppm (d, 26H); 3.1 ppm (m, 4H) ; 2.1 ppm (d, 8H).

### EXAMPLE 5: Preparation of bis-(4,5,6,7-tetrahydroindenyl) diallylxirconium [(THI)₂Zr(CH₂CHCH₂)₂, (VIII)]

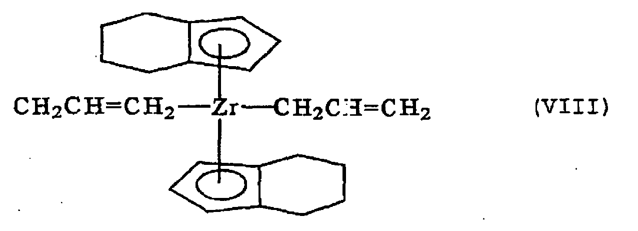

20 ml of a solution in THF of allylmagnesiumchloride (2M) are added to 4.41 g (10 mmoles) of bis-(4,5,6,7-tetrahydroindenyl)zirconiumdichloride, dissolved in 100 ml of anhydrous THF and cooled to -70°C. The mixture is left to rise to room temperature. The solution is dried obtaining a residue to which 50 ml of anhydrous toluene are added and which is dried again to eliminate any traces of THF. The residue is extracted three times with 100 ml of boiling anhydrous pentane. The solution is filtered and the solid washed with hexane. The solution is concentrated under vacuum to a small volume, the solid is filtered and washed with hexane and dried under vacuum. 4.1 g of the desired product having formula (VIII) are obtained with a yield of 93%.
¹HNMR (solvent C₆D₆) : 5.6 ppm (quint, 2H); 5.16 ppm (t, 2H); 4.63 ppm (d, 2H); 2.98 ppm (d, 8H); 2.56 ppm (m, 6H); 2.3 ppm (m, 6H); 2.1 ppm (m, 4H); 1.9 ppm (m, 4H).

### EXAMPLE 6: Preparation of bis-bicyclo[5.3.0]decadienylzirconiumdiallyl

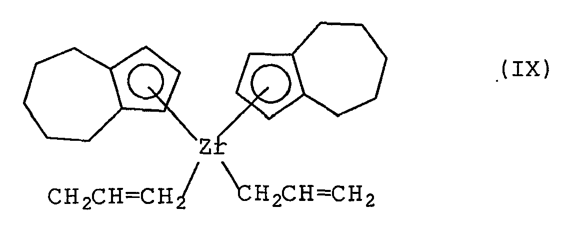

4.7 g (10 mmoles) of bis-bicyclo[5.3.0]decadienylzirconiumdichloride in 100 cc of anhydrous THF at -70°C are reacted with 20 cc of a 2M solution of allylmagnesiumchloride in THF. The temperature is left to rise to room temperature, the solution is evaporated to dryness, 50 cc of toluene are added and the solution is dried again. The residue is extracted with anhydrous pentane and the mixture is concentrated to a small volume under vacuum. The solid is filtered and washed with pentane. The solution is dried with a mechanical pump. 4.1 g of a solid are obtained which, after ¹HNMR analysis, proves to consist of the desired product having formula (IX), with a yield of 93%.
¹HNMR (solvent C₆D₆): 5.6 ppm (quint, 2H); 5.15 ppm (t, 2H); 5.0 ppm (d, 4H); 2.9 ppm (d, 8H); 2.1 ppm (m, 4H); 1.87 ppm (m, 6H); 1.6 ppm (m, 4H); 1.1 ppm (m, 6H).

### EXAMPLE 7: Preparation of a catalytic composition.

0.3 g (0.682 mmoles) of ethylene-bis-(4,5,6,7-tetrahydro-1-indenyl)zirconiumdiallyl, prepared as described in example 3 above, are dissolved, under magnetic stirring and in an inert atmosphere, in 15 cc of anhydrous pentane. 0.39 g (0.682 mmoles) of 1,2,3,4,5,6,7,8-octafluoro-9-(pentafluorophenyl)fluorene, prepared as described in example 8 of the above-mentioned European patent publication number 1,013,675, are slowly added to the solution. The formation of a yellow precipitate is observed, which is isolated by filtration, washed with 5 ml of pentane and dried under vacuum. The catalytic composition thus prepared proves to essentially consist of the desired saline compound corresponding to the general formula: [ethylenebis-(4,5,6,7-tetrahydro-1-indenyl)-zirconiumallyl]⁺• [1,2,3,4,5,6,7,8-octafluoro-9-(pentafluorophenyl)-fluorenyl]⁻

### EXAMPLES 8-12: Polymerization tests

All the preparative operations for the polymerization tests are effected in containers subjected to vacuum, interrupted by three washings with nitrogen for at least two hours and in an atmosphere of nitrogen; the reaction solvent (toluene) was distilled on metallic sodium and conserved on molecular sieves, all the other reagents were used as such. The triisobutyl aluminum (TIBAL) of Witco is used as received from the supplier.

### EXAMPLE 8: polymerization of ethylene

500 ml of toluene and triisobutylaluminum (abbrev. TIBAL; 0.75 mmoles) as impurity scavenger are charged under a stream of nitrogen into a 1 liter steel autoclave, washed with a solution of aluminumtriisobutyl in to toluene and dried under heat and under vacuum. The autoclave is thermostat-regulated at 50°C and 10 ml of toluene solution containing 2.5•10⁻³ mmoles of the complex (THI)₂Zr(CH₂CHCH₂)₂, prepared according to example 5 above, and 2.5•10⁻³ mmoles of 1, 2, 3, 4, 5, 6, 7, 8-octafluoro-9-(pentafluorophenyl) fluorene (PFF) are charged under a stream of nitrogen. After adding components (i) and (ii), for the formation of the catalytic composition *in situ,* the autoclave is pressurized at 0.79 MPa (8 atm) with ethylene and the pressure is kept constant for the whole duration of the test (30 minutes). At the end, the autoclave is depressurized and the polymerization is blocked with methanol. The polymer is recovered by precipitation in methanol acidified with hydrochloric acid (2 1), filtration and drying under vacuum at 40°C for about 8 hours. 50 g of polyethylene are obtained having Mn = 95,000 and Mw = 200,000, MWD = 2.1.

### EXAMPLE 9: ethylene/propylene copolymerization.

500 ml of toluene and 0.75 mmoles of TIBAL as impurity scavenger are charged under a stream of nitrogen into a 1 liter steel autoclave, washed with a solution of aluminumtriisobutyl in toluene and dried under heat and under vacuum. The autoclave is thermostat-regulated at the desired temperature and 10 ml of toluene solution containing 2.5●10⁻³ mmoles of the complex Et (THI)₂Zr(CH₂CHCH₂)₂ and 2.5•10⁻³ mmoles of [B(C₆F₅)₄]⁻ [Ph₃C]⁺ as activator are charged under a stream of nitrogen, in order to obtain a molar ratio (i)/(ii) equal to 1. After introducing the catalytic system which is almost immediately formed in situ, the autoclave is pressurized at 0.79 MPa (8 atm) with an ethylene/propylene mixture (50/50 mole/mole), the feeding being kept constant for the whole duration of the test. After 30 minutes the autoclave is depressurized and the polymerization blocked with methanol. The polymer is recovered by precipitation in methanol acidified with hydrochloric acid (2 1), filtration and drying under vacuum at 40°C for about 8 hours. The reaction conditions and characterization of the polymer obtained are summarized in the following table (I).

### EXAMPLES 10, 11 and 12

Operating under the same conditions as example 9 above, three further tests were effected using different activators (ii) instead of [B(C₆F₅)₄]⁻ [Ph₃C]⁺, as indicated in table (I)below. The results obtained and the characterization of the polymer are summarized in the same table (I).

**Table (I) - Ethylene/propylene polymerization tests -**

| Ex. | Complex (i) | Activator (ii) | T (C°) | time min. | yield (g) | activity kg/g_{Zr}.h | C₃ mol% | Mn x1000 | Mw x1000 | MWD |
|---|---|---|---|---|---|---|---|---|---|---|
| 9 | Et (THI)₂ZrAll₂ | [B(C₆F₅)₄]⁻[Ph₃C]⁺ | 50 | 60 | 31 | 135 | 45 | 32 | 70 | 2.2 |
| 10 | Et (THI)₂ZrAll₂ | B(C₆F₅)₃ | 50 | 60 | 13 | 57 | 43 | 32.5 | 65 | 2 |
| 11 | Et (THI)₂ZrAll₂ | PFF(*) | 50 | 60 | 16 | 70 | 46 | 39.5 | 75 | 1.9 |
| 12 | Et(THI)₂ZrAll₂ | MAO (Al/Zr=500) | 80 | 50 | 66 | 349 | 40 | 25 | 48 | 1.9 |

| | | | | | | | | | | |
|---|---|---|---|---|---|---|---|---|---|---|
| (*) 1, 2, 3, 4, 5, 6, 7, 8-octafluoro-9- (pentafluorophenyl) fluorene | | | | | | | | | | |

## Claims

1. A cyclopentadienyl complex of a transition metal, having the following formula (Ia): 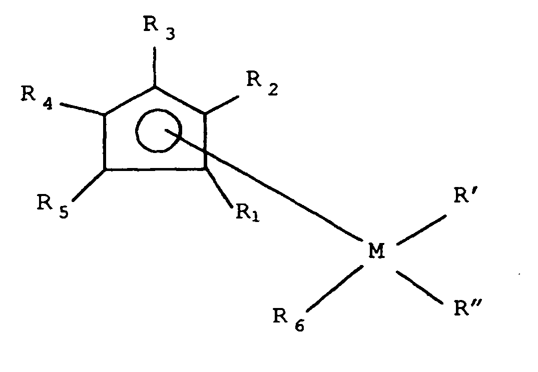 wherein:
- M is a metal selected from titanium, zirconium or hafnium, preferably titanium and zirconium;
- R' represents an allyl radical having from 3 to 20 carbon atoms;
- R" independently represents an organic or inorganic radical, different from cyclopentadienyl or substituted cyclopentadienyl, of an anionic nature and bound to the metal M,
- the groups R₁, R₂, R₃, R₄ and R₅ each independently represent atoms or radicals bound to a first cyclopentadienyl group coordinated to the metal M, and are selected from hydrogen or any other suitable organic or inorganic substituent of said cyclopentadienyl group;
- R₆ represents any suitable organic or inorganic group of an anionic nature, bound to the metal M and comprising from 1 to 20 non-metallic atoms different from hydrogen and further at least one atom selected from N, P, O or S, or a second cyclopentadienyl group, bound to the metal M;
**characterized in that** at least two, preferably at least three, of said R₁, R₂, R₃, R₄ and R₅ groups are independently selected from alkyl or aryl groups having from 1 to 20 carbon atoms, and said radical R₁ in formula (Ia) is substituted by a covalent bond with said R₆ group to form a bridged structure comprising the metal M.

2. The cyclopentadienyl complex according to claim 1, wherein said allyl radical R' is selected from allyl, methallyl and perfluoroallyl.

3. The cyclopentadienyl complex according to one of claims 1 or 2, wherein said R" group is an allyl group having from 3 to 20 carbon atoms, and is preferably equal to R'.

4. The cyclopentadienyl complex according to any of the previous claims, wherein at least two of said radicals R₁, R₂, R₃, R₄ and R₅ in formula (Ia) are alkyl groups having from 1 to 10 carbon atoms.

5. The cyclopentadienyl complex according to any of the previous claims, wherein said R₆ group of the complex having formula (Ia) represents a second cyclopentadienyl group having the following formula (II): 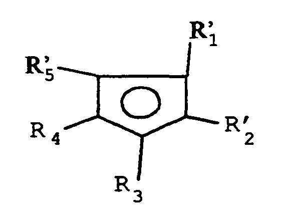 wherein each of the different R'₁, R'₂, R'₃, R'₄, R'₅ groups is independently selected from hydrogen or any alkyl, aryl or silyl radical having from 1 to 20 carbon atoms, or any two of said groups, suitably close to each other, can be bound by means of a covalent bond to form a cyclic structure condensed with said second cyclopentadienyl ring.

6. The cyclopentadienyl complex according to any of the previous claims, wherein said R₆ group of the complex having formula (Ia) is a second cyclopentadienyl group whose structure is equal to that of said first substituted cyclopentadienyl group.

7. Anyone of the following cyclopentadienyl complexes
- bis-(tetramethylcyclopentadienyl)diallylzirconium
- bis-(tetramethylcyclopentadienyl)diallylzirconium chloride
- bis-bicyclo[5.3.0]decadienylzirconiumdiallyl.

8. A cyclopentadienyl complex of a transition metal, having the following formula (Ib): 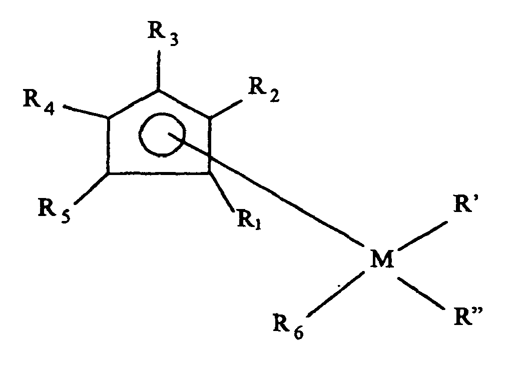 wherein:
- M is a metal selected from titanium, zirconium or hafnium, preferably titanium and zirconium;
- R' represents an allyl radical having from 3 to 20 carbon atoms;
- R" independently represents an organic or inorganic radical, different from cyclopentadienyl or substituted cyclopentadienyl, of an anionic nature and bound to the metal M,
- the groups R₁, R₂, R₃, R₄ and R₅ each independently represent atoms or radicals bound to a first cyclopentadienyl group coordinated to the metal M, and are selected from hydrogen or any other suitable organic or inorganic substituent of said cyclopentadienyl group;
- R₆ represents a second cyclopentadienyl group, bound to the metal M and can and comprising from 1 to 20 non-metallic atoms different from hydrogen
**characterized in that** said first and second cyclopentadienyl groups are both tetrahydroindenyl groups.

9. A catalytic composition which can be used in (co)polymerization processes of α-olefins comprising the following two components in contact with each other:
(i) at least one cyclopentadienyl complex of a transition metal, having the following formula (I'): 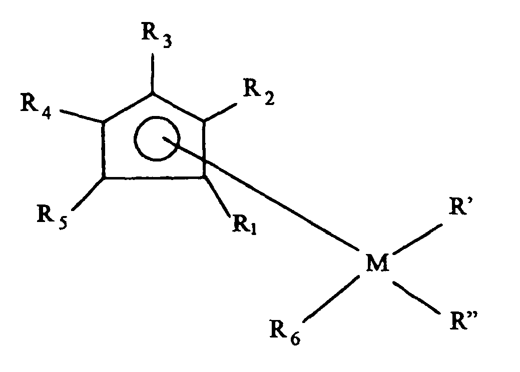 wherein:
- M is a metal selected from titanium, zirconium or hafnium, preferably titanium and zirconium;
- R' represents an allyl radical having from 3 to 20 carbon atoms;
- R" independently represents an organic or inorganic radical, different from cyclopentadienyl or substituted cyclopentadienyl, of an anionic nature and bound to the metal M,
- the groups R₁, R₂, R₃, R₄ and R₅ each independently represent atoms or radicals bound to a first cyclopentadienyl group coordinated to the metal M, and are selected from hydrogen or any other suitable organic or inorganic substituent of said cyclopentadienyl group;
- R₆ represents any suitable organic or inorganic group of an anionic nature, bound to the metal M and comprising from 1 to 20 non-metallic atoms different from hydrogen;
**characterized in that** at least two, preferably at least three, of said R₁, R₂, R₃, R₄ and R₅ groups are independently selected from alkyl or aryl groups having from 1 to 20 carbon atoms, and
(ii) an ionizing activator consisting of at least one organic or organometallic compound capable of forming a positive charge on said allyl-metallocene complex by the extraction of an allyl anion and the formation of a non-coordinating anion having a delocalized ionic charge, said ionizing activators being selected among oxygenated organometallic compounds, non coordinating ionic organometallic compounds, non-coordinating Lewis acids and polyfluorinated cyclopentadienyl compounds, with the proviso that said composition is not bis-(η⁵⁻pentamethylcyclopentadienyl)-η⁵-allylzirconium tetraphenylborate [(C₅(CH₃)₅)₂Zr(η³-C₃H₅)]⁺[B(C₆H₅)₄]⁻.

10. The catalytic composition according to claim 9, wherein said activator (ii) is an oligomeric or polymeric organo-oxygenated compound of aluminum, gallium or tin.

11. The catalytic composition according to claim 10, wherein said activator (ii) is a polymeric aluminoxane comprising in each molecule from 4 to 70 repetitive units having the following formula (III): 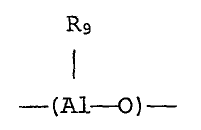 wherein R₉ is a C₁-C₆ alkyl group, preferably methyl.

12. The catalytic composition according to claim 9, wherein said activator (ii) is an ionic organometallic compound of a metal M' selected from boron, aluminum or gallium, and preferably boron, consisting of a cation capable of reacting with the complex having formula (I') extracting therefrom an allyl group to form one or more stable and non-reactive compounds, and a non-coordinating organic anion containing the metal M', whose negative charge is delocalized on a multicentric structure.

13. The catalytic composition according to claim 12, wherein said activator (ii) is a compound or a mixture of compounds having one of the following general formulae:
[(R_{c})xNH₄₋ₓ]⁺●[B(R_{D})₄]⁻; [Ph₃C]⁺●[B(R_{D})₄]⁻;
[(R_{c})₃PH]⁺●[B(R_{D})4]⁻; [Li]⁺●[B(R_{D})₄]⁻; [Li]●[Al(R_{D})4]⁻;
wherein the deponent "x" is an integer ranging from 0 to 3, each R_{c} group independently represents an alkyl or aryl radical having from 1 to 10 carbon atoms and each R_{D} group independently represents an aryl radical partially or, preferably, totally fluorinated, having from 6 to 20 carbon atoms.

14. The catalytic composition according to claim 9, wherein said activator (ii) is a strong Lewis acid whose structure is such as to form a voluminous and non-coordinating anion, with delocalization of the negative charge, by extraction of an allyl anion from said complex having formula (I').

15. The catalytic composition according to claim 9, wherein said activator (ii) comprises at least one fluorinated organic compound having the following formula (IV): 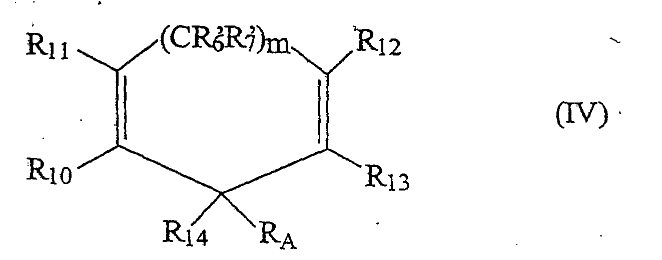 wherein:
- each Rᵢ (with "i" being an integer from 10 to 14), R'₆ and R'₇ group is a substituent of the di-unsaturated cycle independently selected from hydrogen, fluorine and an aliphatic or aromatic, fluorinated or non-fluorinated hydrocarbyl group, having from 1 to 20 carbon atoms, on the condition that at least three, preferably at least four, of the groups R₁₀, R₁₁, R₁₂, R₁₃ R'₆ or R'₇ are independently selected from the group consisting of:
- fluorine, or
- a fluorinated alkyl group having the formula -CF(R'₈R'₉), wherein each R'₈ or R'₉ group can have any of the above meanings of the Rᵢ groups and at least one of these is fluorine, or fluorinated alkyl at least in position 1, or a fluorinated aryl Ar_{F} as defined below, or a fluorinated vinyl group V_{F} as defined below, or
- a fluorinated aryl Ar_{F} group substituted on the aromatic ring with at least two groups selected from fluorine, a -CF(R'₈R'₉) group as defined above or a different Ar_{F} group or
- a fluorinated vinyl group V_{F} substituted on at least two positions of the double bond with groups selected from fluorine, a -CF (R'₈R'₉) group or an Ar_{F} group as defined above;
- the R_{A} group is hydrogen, -OH, -SH, or it forms, together with said R₁₄ group, a carbonyl oxygen, but is preferably hydrogen; and
- "m" can have the values of 1 or 0.

16. The catalytic composition according to claim 15, wherein "m", in said fluorinated organic compound having formula (IV), is equal to 0.

17. The catalytic composition according to claim 16, wherein said compound having formula (IV) is a fluorinated fluorenyl compound having the following formula (V): 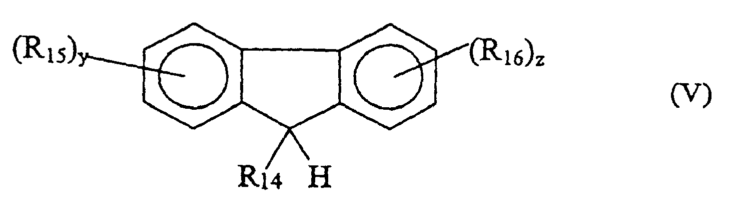 wherein: R₁₄ has the same meaning defined for the compounds having formula (IV);
- y is an integer from 1 to 4;
- z is an integer from 1 to 4;
the groups R₁₅ and R₁₆ are, if necessary, independently substituents of each hydrogen atom of the respective aromatic ring in one or more of the four positions available, and are selected from fluorine or an aliphatic or aromatic, fluorinate or non-fluorinated hydrocarbyl group having from 1 to 20 carbon atoms, optionally joined to a different R₁₅ hydrocarbyl group or, respectively, R₁₆ to form a further cycle, on the condition that at least 3, preferably at least 4, of said groups R₄, R₁₅ and R₁₆, are independently selected from the group consisting of:
- fluorine, or
- a fluorinated alkyl group having the formula -CF(R'₈R'₉), wherein each R'₈ or R'₉ group can have any of the above meanings of the Rᵢ groups and at least one of them is fluorine, or fluorinated alkyl at least in position 1, or a fluorinated aryl Ar_{F} as defined below, or a fluorinated vinyl group V_{F} as defined below, or
- a fluorinated aryl Ar_{F} group substituted on the aromatic ring with at least two groups selected from fluorine, a -CF(R'₈R'₉) group as defined above or a different Ar_{F} group or
- a fluorinated vinyl group V_{F} substituted on at least two positions of the double bond with groups selected from fluorine, a -CF(R'₈R'₉) group or an Ar_{F} group as defined above.

18. The catalytic composition according to any of the previous claims from 15 to 17, wherein said fluorinated organic compound having formula (IV) or formula (V) in said activator (ii), is added to the catalytic composition in a molar ratio ranging from 1 to 10, with respect to the moles of the allyl-metallocene complex having formula (I'). spect to the moles of the alkyl-metallocene complex having formula (I').

19. A process for the (co)polymerization of at least one α-olefin, either in continuous or batchwise, in one or more steps in suitable reactors, at low (0.1-1.0 MPa), medium (1.0-10 MPa) or high (10-150 MPa) pressure, at temperatures ranging from 20° to 240°C, optionally in the presence of an inert diluent, **characterized in that** said one or more α-olefins are (co)polymerized, under one of the above conditions, in the presence of a catalytic composition according to any of the previous claims from 9 to 18.

20. The process according to claim 19, wherein said at least one α-olefin is ethylene.

21. The process according to claim 20, wherein ethylene is co-polymerized with at least a second α-olefin having from 3 to 10 carbon atoms.

22. The process according to claim 21, wherein, in addition to said second α-olefin, an aliphatic or alicyclic non-conjugated diene, having from 5 to 20 carbon atoms is copolymerized with ethylene.

23. The process according to any of the previous claims from 19 to 22, **characterized in that** it is carried out in solution or suspension in an inert liquid medium consisting of an aliphatic or cycloaliphatic hydrocarbon having from 3 to 15 carbon atoms, or a mixture thereof.

24. The process according to any of the previous claims from 19 to 23, wherein said catalytic composition is prepared separately and subsequently put in contact with said at least one α-olefin.

25. The process according to any of the previous claims from 20 to 24, wherein said catalytic composition is prepared by putting said components (i) and (ii) in contact with each other, directly in the polymerization environment.

26. A catalytic composition according to anyone of the previous claims from 9 to 18, wherein said component (i) is a cyclopentadienyl complex according to any claim from 1 to 8.

## Patentansprüche

1. Cyclopentadienylkomplex eines Übergangsmetalls mit der nachfolgenden Formel (Ia): 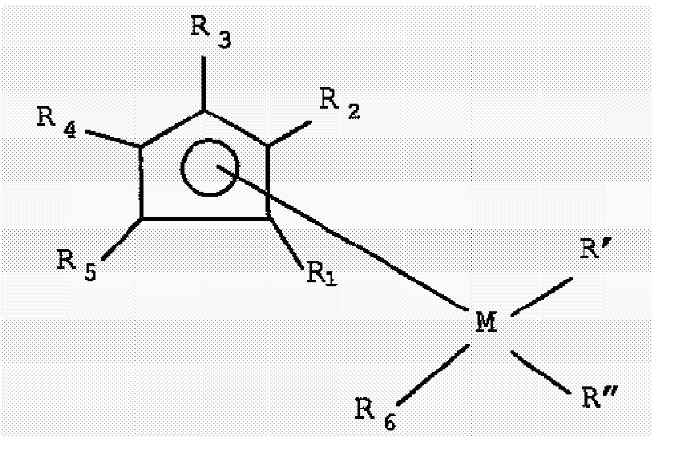 worin:
- M ein Metall ausgewählt aus Titan, Zirkonium oder Hafnium, vorzugsweise Titan und Zirkonium, ist;
- R' ein Allylradikal mit 3 bis 20 Kohlenstoffatomen ist;
- R", unabhängig voneinander, ein organisches oder anorganisches Radikal, welches eine anionische Natur aufweist und an das Metall M gebunden ist sowie von Cyclopentadienyl oder substituiertem Cyclopentadienyl verschieden ist, ist;
- die Gruppen R₁, R₂, R₃, R₄ und R₅, jeweils unabhängig voneinander, Atome oder Radikale sind, welche an eine erste, mit dem Metall M koordinierte Cyclopentadienylgruppe gebunden sind und ausgewählt sind aus Wasserstoff oder jedem anderen geeigneten organischen oder anorganischen Substituenten der Cyclopentadienylgruppe;
- R₆ jede geeignete organische oder anorganische Gruppe mit einer anionischen Natur ist, welche an das Metall M gebunden ist und 1 bis 20 nichtmetallische Atome unterschiedlich von Wasserstoff enthält sowie des Weiteren wenigstens ein Atom ausgewählt aus N, P, O oder S umfasst, oder eine zweite Cyclopentadienylgruppe, welche an das Metall M gebunden ist, ist;
**dadurch gekennzeichnet, dass** wenigstens zwei, vorzugsweise wenigstens drei, der R₁-, R₂-, R₃-, R₄- und Rs-Gruppen, unabhängig voneinander, ausgewählt sind aus Alkyl- oder Arylgruppen mit 1 bis 20 Kohlenstoffatomen und das Radikal R₁ in der Formel (Ia) durch eine kovalente Bindung mit der R₆-Gruppe substituiert ist, um eine überbrückte Struktur enthaltend das Metall M zu bilden.

2. Cyclopentadienylkomplex nach Anspruch 1, wobei das Allylradikal R' ausgewählt ist aus Allyl, Methallyl und Perfluorallyl.

3. Cyclopentadienylkomplex nach Anspruch 1 oder 2, wobei die R"-Gruppe eine Allylgruppe mit 3 bis 20 Kohlenstoffatomen ist und vorzugsweise gleich R' ist.

4. Cyclopentadienylkomplex nach einem der vorhergehenden Ansprüche, wobei wenigstens zwei der Radikale R₁, R₂, R₃, R₄ und R₅ in der Formel (Ia) Alkylgruppen mit 1 bis 10 Kohlenstoffatomen sind.

5. Cyclopentadienylkomplex nach einem der vorhergehenden Ansprüche, wobei die R₆-Gruppe des Komplexes mit der Formel (Ia) eine zweite Cyclopentadienylgruppe mit der nachfolgenden Formel (II) wiedergibt: 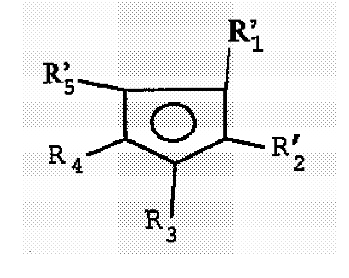 worin jede der unterschiedlichen R'₁-, R'₂-, R'₃-, R'₄-, R'₅-Gruppen, unabhängig voneinander, ausgewählt ist aus Wasserstoff oder jedem von Alkyl-, Aryl- oder Silylradikal mit 1 bis 20 Kohlenstoffatomen oder alle zwei der zueinander ausreichend nahen Gruppen mittels einer kovalenten Bindung verbunden sein können, um eine zyklische Struktur zu bilden, welche mit dem zweiten Cyclopentadienylring kondensiert ist.

6. Cyclopentadienylkomplex nach einem der vorhergehenden Ansprüche, wobei die R₆-Gruppe des Komplexes mit der Formel (Ia) eine zweite Cyclopentadienylgruppe ist, deren Struktur zu der der ersten substituierten Cyclopentadienylgruppe gleich ist.

7. Jeder der nachfolgenden Cyclopentadienylkomplexe
- Bis-(tetramethylcyclopentadienyl)diallylzirkonium
- Bis-(tetramethylcyclopentadienyl)diallylzirkoniumchlorid
- Bis-bicyclo[5.3.0]decadienylzirkoniumdiallyl.

8. Cyclopentadienylkomplex eines Übergangsmetalls mit der nachfolgenden Formel (Ib): 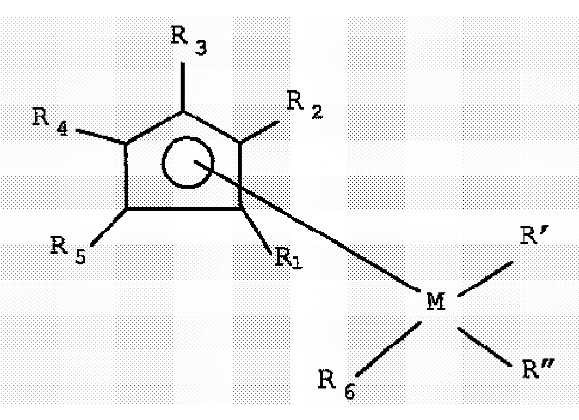 worin:
- M ein Metall ausgewählt aus Titan, Zirkonium oder Hafnium, vorzugsweise Titan und Zirkonium ist;
- R' ein Allylradikal mit 3 bis 20 Kohlenstoffatomen ist;
- R", unabhängig voneinander, ein organisches oder anorganisches Radikal ist, welches eine anionische Natur aufweist und an das Metall M gebunden ist sowie von Cyclopentadienyl und substituiertem Cyclopentadienyl unterschiedlich ist,
- die Gruppen R₁, R₂, R₃, R₄ und R₅, jeweils unabhängig voneinander, Atome oder Radikale sind, welche an eine erste, mit dem Metall M koordinierte Cyclopentadienylgruppe gebunden sind und ausgewählt sind aus Wasserstoff oder jedem anderen geeigneten organischen oder anorganischen Substituenten der Cyclopentadienylgruppe,
- R₆ eine zweite, an das Metall M gebundene Cyclopentadienylgruppe ist, welche 1 bis 20 nichtmetallische Atome unterschiedlich von Wasserstoff enthält,
**dadurch gekennzeichnet, dass** die ersten und zweiten Cyclopentadienylgruppen beide Tetrahydroindenylgruppen sind.

9. Katalytische Zusammensetzung, welche in (Co)Polymerisationsverfahren eines die beiden nachfolgenden Komponenten in Kontakt miteinander enthaltenden α-Olefins eingesetzt werden kann:
(i) wenigstens einen Cyclopentadienylkompex eines Übergangsmetalls mit der nachfolgenden Formel (I'): 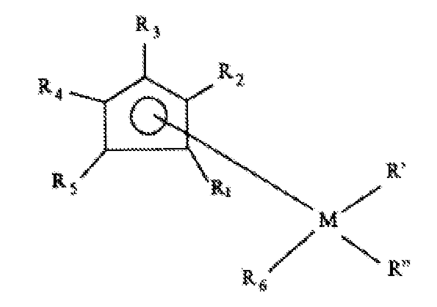 worin:
- M ein Metall ausgewählt aus Titan, Zirkonium oder Hafnium, vorzugsweise Titan und Zirkonium, ist,
- R' ein Allylradikal mit 3 bis 20 Kohlenstoffatomen ist;
- R", unabhängig voneinander, ein organisches oder anorganisches Radikal ist, welches eine anionische Struktur aufweist und an das Metall M gebunden ist sowie von Cyclopentadienyl oder substituiertem Cyclopentadienyl verschieden ist,
- die Gruppen R₁, R₂, R₃, R₄ und R₅, jeweils unabhängig voneinander, Atome oder Radikale sind, welche an eine erste, an das Metall M koordinierte Cyclopentadienylgruppe gebunden sind und ausgewählt sind aus Wasserstoff oder jedem anderen geeigneten organischen oder anorganischen Substituenten der Cyclopentadienylgruppe;
- R₆ jede geeignete organische oder anorganische Gruppe einer anionischen Struktur, welche an das Metall M gebunden ist und 1 bis 20 nichtmetallische Atome unterschiedlich von Wasserstoff aufweist, ist;
**dadurch gekennzeichnet, dass** wenigstens zwei, vorzugsweise wenigstens drei, der R₁-, R₂-, R₃-, R₄- und Rs-Gruppen, jeweils unabhängig voneinander, ausgewählt sind aus Alkyl- oder Arylgruppen mit 1 bis 20 Kohlenstoffatomen, und
(ii) einen ionisierenden Aktivator bestehend aus wenigstens einer organischen oder organometallischen Verbindung befähigt zum Bilden einer positiven Ladung an dem Allyl-Metallocen-Komplex durch die Extraktion eines Allylanions und die Bildung eines nicht koordinierten Anions mit einer delokalisierten, ionischen Ladung, wobei die ionisierenden Aktivatoren ausgewählt sind aus oxygenierten organometallischen Verbindungen, nicht koordinierenden ionischen organometallischen Verbindungen, nicht koordinierenden Lewis-Säuren und polyfluorierten Cyclopentadienylverbindungen mit der Maßgabe, dass die Zusammensetzung nicht Bis-(η⁵-pentamethylcyclopentadienyl)-η³-allylzirkoniumtetraphenylborat [(C₅(CH₃)₅)₂Zr(η³-C₃H₅)]⁺[B(C₆H₅)₄]⁻ ist.

10. Katalytische Zusammensetzung nach Anspruch 9, wobei der Aktivator (ii) eine organooxygenierte Oligomer- oder Polymerverbindung von Aluminium, Gallium oder Zinn ist.

11. Katalytische Zusammensetzung nach Anspruch 10, wobei der Aktivator (ii) ein polymeres Aluminoxan enthaltend in jedem Molekül zwischen 4 und 70 Wiederholungseinheiten mit der nachfolgenden Formel (III) ist: 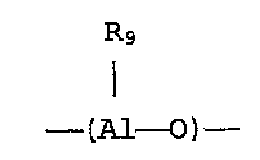 worin R₉ eine C₁-C₆-Alkylgruppe, vorzugsweise Methyl, ist.

12. Katalytische Zusammensetzung nach Anspruch 9, wobei der Aktivator (ii) eine ionische organometallische Verbindung eines Metalls M' ausgewählt aus Bor, Aluminium oder Gallium, und vorzugsweise Bor ist, welche aus einem Kation befähigt zum Reagieren mit dem Komplex mit der Formel (I') extrahierend hiervon eine Allylgruppe, um eine oder mehrere stabile und nicht reaktive Verbindungen zu bilden, sowie einem nicht koordinierenden organischen Anion enthaltend das Metall M', dessen negative Ladung an einer multizentrischen Struktur delokalisiert ist, besteht.

13. Katalytische Zusammensetzung nach Anspruch 12, wobei der Aktivator (ii) eine Verbindung oder eine Mischung aus Verbindungen mit einer der nachfolgenden allgemeinen Formeln ist:
[(Rc)xNH₄₋ₓ]⁺•[B(R_{D})₄]⁻; [Ph₃C]⁺•[B(R_{D})₄]⁻;
[(Rc)₃PH]⁺•[B(R_{D})₄]⁻; [Li]⁺•[B(R_{D})₄]⁻; [Li]⁺•[A1(R_{D})₄]⁻;
worin das Zeichen "x" eine ganze Zahl in einem Bereich zwischen 0 und 3 ist, jede R_{c}-Gruppe, unabhängig voneinander, ein Alkyl- oder Arylradikal mit 1 bis 10 Kohlenstoffatomen ist und jede R_{D}-Gruppe, unabhängig voneinander, ein Arylradikal mit 6 bis 20 Kohlenstoffatomen, welches teilweise oder bevorzugt vollständig fluoriert ist, ist.

14. Katalytische Zusammensetzung nach Anspruch 9, worin der Aktivator (ii) eine starke Lewis-Säure ist, deren Struktur derart ist, um durch Extraktion eines Allylanions aus dem Komplex mit der Formel (I') ein voluminöses und nicht koordinierendes Anion mit einer Delokalisierung der negativen Ladung zu bilden.

15. Katalytische Zusammensetzung nach Anspruch 9, wobei der Aktivator (ii) wenigstens eine fluorierte organische Verbindung mit der nachfolgenden Formel (IV) enthält: 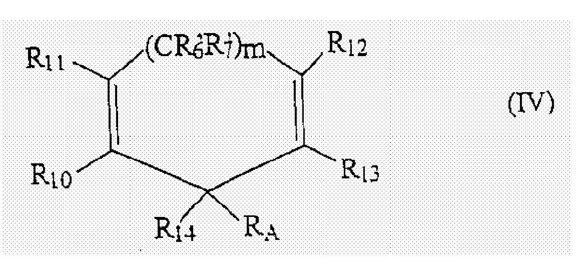 worin:
- jede Rᵢ- (wobei "i" eine ganze Zahl zwischen 10 und 14 ist), R'₆- und R'₇-Gruppe ein Substituent des zweifach ungesättigten Zyklus, unabhängig voneinander, ausgewählt aus Wasserstoff, Fluor und einer aliphatischen oder aromatischen, fluorierten oder nicht fluorierten Kohlenwasserstoffgruppe mit 1 bis 20 Kohlenstoffatomen ist mit der Bedingung, dass wenigstens drei, vorzugsweise wenigstens vier, der Gruppen R₁₀, R₁₁, R₁₂, R₁₃, R'₆ oder R'₇ unabhängig voneinander ausgewählt sind aus der Gruppe bestehend aus:
- Fluor oder
- einer fluorierten Alkylgruppe mit der Formel -CF(R'₈R'₉),
wobei jede R'₈- oder R'₉-Gruppe jede der vorgenannten Bedeutungen für die Rᵢ-Gruppen haben kann und wenigstens eine dieser Fluor oder fluoriertes Alkyl zumindest in Position 1 oder ein fluoriertes Aryl Ar_{F} wie nachfolgend definiert oder eine fluorierte Vinylgruppe V_{F} wie nachfolgend definiert ist, oder
- einer fluorierten Aryl Ar_{F}-Gruppe substituiert an dem aromatischen Ring mit wenigstens zwei Gruppen ausgewählt aus Fluor, einer -CF(R'₈R'₉)-Gruppe wie zuvor definiert oder einer anderen Ar_{F}-Gruppe oder
- einer fluorierten Vinylgruppe V_{F} substituiert an wenigstens zwei Positionen der Doppelbindung mit Gruppen ausgewählt aus Fluor, einer -CF(R'₈R'₉)-Gruppe oder einer wie zuvor definierten Ar_{F}-Gruppe;
- die R_{A}-Gruppe Wasserstoff, -OH, -SH ist oder diese zusammen mit der R₁₄-Gruppe ein Carbonylsauerstoff bildet, aber bevorzugt Wasserstoff ist; und
- "m" die Werte 1 oder 0 haben kann.

16. Katalytische Zusammensetzung nach Anspruch 15, worin "m" in der fluorierten organischen Verbindung mit der Formel (IV) gleich 0 ist.

17. Katalytische Zusammensetzung nach Anspruch 16, wobei die Verbindung mit der Formel (IV) eine fluorierte, Fluorenylzusammensetzung mit der nachfolgenden Formel (V) ist: 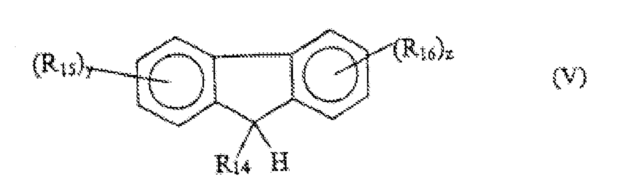 worin: R₁₄ dieselbe Bedeutung wie zuvor für die Verbindungen mit der Formel (IV) definiert hat:
- y eine ganze Zahl zwischen 1 und 4 ist;
- z eine ganze Zahl zwischen 1 und 4 ist;
wobei die Gruppen R₁₅ und R₁₆ gegebenenfalls unabhängig voneinander Substituenten von jedem Wasserstoffatom des entsprechenden aromatischen Rings in einer oder mehreren der vier verfügbaren Positionen sind und ausgewählt sind aus Fluor oder einer aliphatischen oder aromatischen, fluorierten oder nicht fluorierten Kohlenwasserstoffgruppe mit 1 bis 20 Kohlenstoffatomen, optional verbunden mit einer anderen R₁₅-Kohlenwasserstoffgruppe bzw. R₁₆₋Gruppe, um einen weiteren Ring zu bilden, mit der Bedingung, dass wenigstens 3, vorzugsweise wenigstens 4, der Gruppen R₁₄, R₁₅ und R₁₆, jeweils unabhängig voneinander, ausgewählt sind aus der Gruppe bestehend aus:
- Fluor oder
- einer fluorierten Alkylgruppe mit der Formel -CF(R'₈R'₉), worin jede R'₈- oder R'₉-Gruppe jede der zuvor genannten Bedeutungen der Rᵢ-Gruppen haben kann und wenigstens eine dieser Fluor oder fluoriertes Alkyl wenigstens an der Position 1 oder ein fluoriertes Aryl Ar_{F} wie nachfolgend definiert oder eine fluorierte Vinylgruppe V_{F} wie nachfolgend definiert ist, oder
- einer fluorierten Aryl Ar_{F}-Gruppe substituiert an dem aromatischen Ring mit wenigstens zwei Gruppen ausgewählt aus Fluor, einer -CF(R'₈R'₉)-Gruppe wie zuvor definiert oder einer anderen Ar_{F}-Gruppe oder
- einer fluorierten Vinylgruppe V_{F} substituiert an wenigstens zwei Positionen der Doppelbindung mit Gruppen ausgewählt aus Fluor, einer -CF(R'₈R'₉)-Gruppe oder einer wie zuvor definierten Ar_{F}-Gruppe.

18. Katalytische Zusammensetzung nach einem der vorhergehenden Ansprüche 15 bis 17, wobei die fluorierte organische Verbindung mit der Formel (IV) oder der Formel (V) in dem Aktivator (ii) zu der katalytischen Zusammensetzung in einem molaren Verhältnis in einem Bereich zwischen 1 und 10 mit Bezug zu den Molen des Allyl-Metallocen-Komplexes mit der Formel (I') zugefügt wird.

19. Verfahren zur (Co)Polymerisation von wenigstens einem α-Olefin, entweder kontinuierlich oder chargenweise, in einem oder mehreren Schritten in geeigneten Reaktoren bei geringem (0,1 - 1,0 MPa), mittlerem (1,0 - 10 MPa) oder hohem (10 - 150 MPa) Druck bei Temperaturen in einem Bereich zwischen 20 °C und 240 °C, optional in der Gegenwart eines inerten Verdünners, **dadurch gekennzeichnet, dass** das eine oder die mehreren α-Olefine unter einer der vorgenannten Bedingungen in der Gegenwart einer katalytischen Zusammensetzung nach einem der vorhergehenden Ansprüche 9 bis 18 (co)polymerisiert werden.

20. Verfahren nach Anspruch 19, wobei das wenigstens eine α-Olefin Ethylen ist.

21. Verfahren nach Anspruch 20, wobei Ethylen mit wenigstens einem zweiten α-Olefin mit 3 bis 10 Kohlenstoffatomen copolymerisiert wird.

22. Verfahren nach Anspruch 21, wobei zusätzlich zu dem zweiten α-Olefin ein aliphatisches oder alicyclisches, nicht konjugiertes Dien mit 5 bis 20 Kohlenstoffatomen mit Ethylen copolymerisiert wird.

23. Verfahren nach einem der vorhergehenden Ansprüche 19 bis 22, **dadurch gekennzeichnet, dass** dieses in Lösung oder in Suspension in einem inerten flüssigen Medium bestehend aus einem aliphatischen oder cycloaliphatischen Kohlenwasserstoff mit 3 bis 15 Kohlenstoffatomen oder einer Mischung hiervon durchgeführt wird.

24. Verfahren nach einem der vorhergehenden Ansprüche 19 bis 23, wobei die katalytische Zusammensetzung getrennt hergestellt wird und nachfolgend in Kontakt mit dem wenigstens einen α-Olefin gebracht wird.

25. Verfahren nach einem der vorhergehenden Ansprüche 20 bis 24, wobei die katalytische Zusammensetzung durch In-Kontakt-Bringen der Komponenten (i) und (ii) miteinander direkt in der Polymerisationsumgebung hergestellt wird.

26. Katalytische Zusammensetzung nach einem der vorstehenden Ansprüche 9 bis 18, wobei die Komponente (i) ein Cyclopentadienylkomplex gemäß einem der Ansprüche 1 bis 8 ist.

## Revendications

1. Complexe de cyclopentadiériyle d'un métal de transition, répondant à la formule (Ia) suivante : 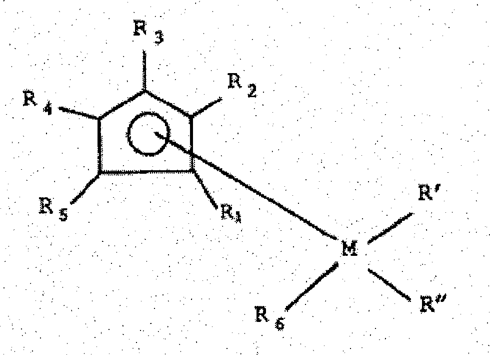 dans laquelle :
- M est un métal choisi parmi le titane, le zirconium ou l'hafnium, de préférence le titane et le zirconium,;
- R' représente un radical allyle ayant de 3 à 20 atomes de carbone ;
- R" représente indépendamment un radical organique ou inorganique, différent du cyclopentadiényle ou d'un cyclopentadiényle substitué, de nature anionique et lié au métal M,
- les groupes R₁, R₂, R₃, R₄ et R₅ représentent chacun indépendamment des atomes ou radicaux liés à un premier groupe cyclopentadiényle coordiné au métal M, et sont choisis parmi un atome d'hydrogène ou tout autre substituant organique ou inorganique approprié dudit groupe cyclopentadiényle ;
- R₆ représente tout groupe organique ou inorganique approprié de nature anionique, lié au métal M et comprenant de 1 à 20 atomes non métalliques différents d'un atome d'hydrogène et en outre au moins un atome choisi parmi N, P, O ou S, ou un deuxième groupe cyclopentadiényle, lié au métal M ;
**caractérisé en ce qu'**au moins deux, de préférence au moins trois, desdits groupes R₁, R₂, R₃, R₄ et R₅ sont indépendamment choisis parmi les groupes alkyle ou aryle ayant de 1 à 20 atomes de carbone, et ledit radical R₁ dans la formulé (Ia) est substitué par une liaison covalente avec ledit groupe R₆ pour former une structure pontée comprenant le métal M.

2. Complexe de cyclopentadiényle selon la revendication 1, dans lequel ledit radical allyle R' est choisi parmi les groupes allyle, méthallyle et perfluoroallyle.

3. Complexe de cyclopentadiényle selon l'une quelconque des revendications 1 ou 2, dans lequel ledit groupe R" est un groupe allyle ayant de 3 à 20 atomes de carbone, et est de préférence égal à R'.

4. Complexe de cyclopentadiényle selon l'une quelconque des revendications précédentes, dans lequel au moins deux desdits radicaux R₁, R₂, R₃, R₄ et R₅ dans la formule (Ia) sont des groupes alkyle ayant de 1 à 10 atomes de carbone.

5. Complexe de cyclopentadiényle selon l'une quelconque des revendications précédentes, dans lequel ledit groupe R₆ du complexe répondant à la formule (Ia) représente un deuxième groupe cyclopentadiényle répondant à la formule (II) suivante : 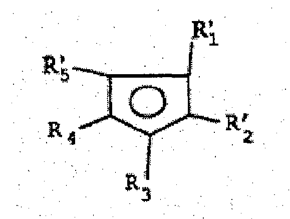 dans laquelle chacun des différents groupes R'₁, R'₂, R'₃, R'₄, R'₅ est indépendamment choisi parmi un atome d'hydrogène ou tout radical alkyle, aryle ou silyle ayant de 1 à 20 atomes de carbone, ou deux quelconques desdits groupes, proches de manière appropriée l'un de l'autre, peuvent être liés au moyen d'une liaison covalente pour former une structure cyclique condensée avec ledit deuxième cycle cyclopentadiényle.

6. Complexe de cyclopentadiényle selon l'une quelconque des revendications précédentes, dans lequel ledit groupe R₆ du complexe répondant à la formule (Ia) est un deuxième groupe cyclopentadiényle dont la structure est égale à celle dudit premier groupe cyclopentadiényle substitué.

7. L'un quelconque des complexes de cyclopentadiényle suivants
- le bis-(tétraméthylcyclopentadiényl)diallylzirconium
- le chlorure de bis-(tétraméthylcyclopentadiényl)diallylzirconium
- le bis-bicyclo[5,3,0]décadiénylzirconiumdiallyle.

8. Complexe de cyclopentadiényle d'un métal de transition, répondant à la formule (Ib) suivante : 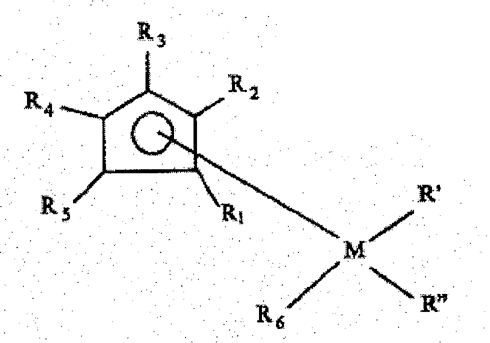 dans laquelle :
- M est un métal choisi parmi le titane, le zirconium ou l'hafnium, de préférence le titane et le zirconium ;
- R' représente un radical allyle ayant de 3 à 20 atomes de carbone ;
- R" représente indépendamment un radical organique ou inorganique, différent du cyclopentadiényle ou d'un cyclopentadiényle substitué, de nature anionique et lié au métal M,
- les groupes R₁, R₂, R₃, R₄ et R₅ représentent chacun indépendamment des atomes ou radicaux liés à un premier groupe cyclopentadiényle coordiné au métal M, et sont choisis parmi un atome d'hydrogène ou tout autre substituant organique ou inorganique approprié dudit groupe cyclopentadiényle ;
- R₆ représente un deuxième groupe cyclopentadiényle, lié au métal M et comprenant de 1 à 20 atomes non métalliques différents d'un atome d'hydrogène
**caractérisé en ce que** lesdits premier et deuxième groupes cyclopentadiényle sont tous deux des groupes tétrahydroindényle.

9. Composition catalytique qui peut être utilisée dans des procédés de (co)polymérisation d'α-oléfines comprenant les deux composants suivants au contact l'un de l'autre :
(i) au moins un complexe de cyclopentadiényle d'un métal de transition, répondant à la formule (I') suivante : 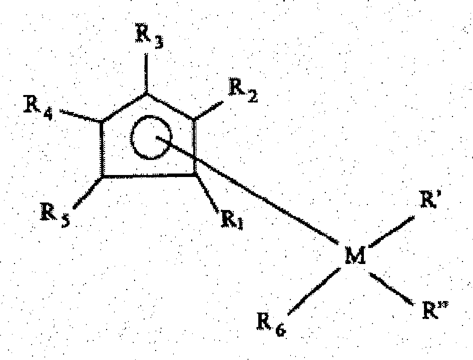 dans laquelle :
- M est un métal choisi parmi le titane, le zirconium ou l'hafnium, de préférence le titane et le zirconium ;
- R' représente un radical allyle ayant de 3 à 20 atomes de carbone ;
- R" représente indépendamment un radical organique ou inorganique, différent du cyclopentadiényle ou d'un cyclopentadiényle substitué, d'une nature anionique et lié au métal M,
- les groupes R₁, R₂, R₃, R₄ et R₅ représentent chacun indépendamment des atomes ou radicaux liés à un premier groupe cyclopentadiényle coordiné au métal M, et sont choisis parmi un atome d'hydrogène ou tout autre substituant organique ou inorganique approprié dudit groupe cyclopentadiényle ;
- R₆ représente, tout groupe organique ou inorganique approprié d'une nature anionique, lié au métal M et comprenant de 1 à 23 atomes non métalliques différents d'un atome d'hydrogène ;
**caractérisée en ce qu'**au moins deux, de préférence au moins trois, desdits groupes R₁, R₂, R₃, R₄ et R₅ sont indépendamment choisis parmi les groupes alkyle ou aryle ayant de 1 à 20 atomes de carbone, et
(ii) un activateur ionisant consistant en au moins un composé organique ou organométallique capable de former une charge positive sur ledit complexe d'allyle-métallocène, par l'extraction d'un anion allylique et la formation d'un anion non coordinant ayant une charge ionique délocalisée, lesdits activateurs ionisants étant choisis parmi les composés organométalliques oxygénés, les composés organométalliques ioniques non coordinants, les acides de Lewis non coordinants et les composés de cyclopentadiényle polyfluorés, à condition que ladite composition ne soit pas le tétraphénylborate de bis-(η⁵-pentaméthylcyclopentadiényl)-η³-allylzirconium [(C₅(CH₃)₅)₂Zr(η²-C₃H₅)]⁺[B(C₆H₅)₄]⁻.

10. Composition catalytique selon la revendication 9, dans laquelle ledit activateur (ii) est un composé organo-oxygéné oligomère ou polymère d'aluminium, de gallium ou d'étain.

11. Composition catalytique selon la revendication 10, dans laquelle ledit activateur (ii) est un aluminoxane polymère comprenant dans chaque molécule de 4 à 70 motifs répétitifs répondant à la formule (III) suivante : 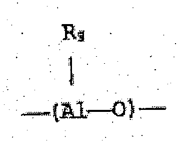 dans laquelle R₉ est un groupe alkyle en C₁ à C₆, de préférence le méthyle.

12. Composition catalytique selon la revendication 9, dans laquelle ledit activateur (ii) est un composé organométallique ionique d'un métal M' choisi parmi le bore, l'aluminium ou le gallium, ét de préférence le bore, consistant en un cation capable de réagir avec le complexe répondant à la formule (I'), en extrayant de celui-ci un groupe allyle pour former un ou plusieurs composés stables et non réactifs, et en un anion organique non coordinant contenant le métal M', dont la charge négative est délocalisée sur une structure multicentrique.

13. Composition catalytique selon la revendication 12, dans laquelle ledit activateur (ii) est un composé ou un mélange de composés répondant à l'une des formules générales suivantes :
[(R_{c})xNH₄₋ₓ]⁺•[B(R_{D})₄]⁻ ; [Ph₃C]⁺•[B(R_{D})₄]⁻ ;
[(R_{c})₃PH]⁺•[B(R_{D})₄]⁻ ; [Li]⁺•[B(R_{D})₄]⁻ ; [Li]⁺•[Al(R_{D})₄]⁻ ;
dans lesquelles l'exposant « x » est un nombre entier allant de 0 à 3, chaque groupe R_{c} représente indépendamment un radical alkyle ou aryle ayant de 1 à 10 atomes de carbone, et chaque groupe R_{D} représente indépendamment un radical aryle partiellement ou, de préférence, totalement fluoré, ayant de 6 à 20 atomes de carbone.

14. Composition catalytique selon la revendication 9, dans laquelle ledit activateur (ii) est un acide de Lewis fort dont la structure est propre à former un anion volumineux et non coordinant, ayant une délocalisation de la charge négative, par extraction d'un anion allylique dudit complexe répondant à la formule (I').

15. Composition catalytique selon la revendication 9, dans laquelle ledit activateur (ii) comprend au moins un composé organique fluoré répondant à la formule (IV) suivante : 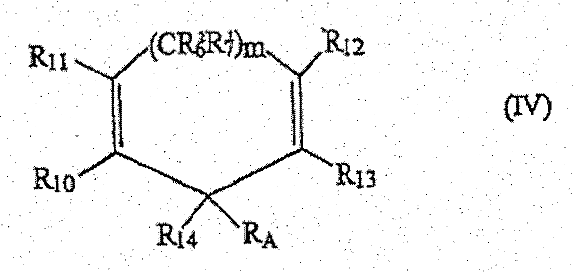 dans laquelle :
- chaque groupe Rᵢ (« i » étant un nombre entier de 10 à 14), R'₆ et R'₇ sont un substituant du cycle di-insaturé indépendamment choisi parmi un atome d'hydrogène, de fluor et un groupe hydrocarbyle aliphatique ou aromatique, fluoré ou non fluoré, ayant de 1 à 20 atomes de carbone, à la condition qu'au moins trois, de préférence au moins quatre, des groupes R₁₀, R₁₁, R₁₂, R₁₃, R'₆ ou R'₇ soient indépendamment choisis dans le groupe constitué par :
- un atome de fluor, ou
- un groupe alkyle fluoré répondant à la formule -CF(R'₈R'₉), dans laquelle chaque groupe R'₈ ou R'₉ peut avoir l'une quelconque des significations ci-dessus des groupes Rᵢ et au moins l'un de ceux-ci est un atome de fluor, ou un groupe alkyle fluoré au moins en position 1, ou un groupe aryle fluoré Ar_{F} tel que défini ci-dessous, ou un groupe vinyle fluoré V_{F} tel que défini ci-dessous, ou
- un groupe aryle fluoré Ar_{F} substitué sur le cycle aromatique par au moins deux groupes choisis parmi un atome de fluor, un groupe -CF(R'₈R'₉) tel que défini ci-dessus, ou un groupe Ar_{F} différent, ou
- un groupe vinyle fluoré V_{F} substitué sur au moins deux positions de la double liaison par des groupes choisis parmi un atome de fluor, un groupe -CF(R'₈R'₉), ou un groupe Ar_{F} tel que défini ci-dessus ;
- le groupe R_{A} est un atome d'hydrogène, -OH, -SH, ou il forme, conjointement avec ledit groupe R₁₄, un oxygène de carbonyle, mais est de préférence un atome d'hydrogène ; et
- « m » peut prendre les valeurs de 0 ou 1.

16. Composition catalytique selon la revendication 15, dans laquelle « m », dans ledit composé organique fluoré répondant à la formule (IV), est égal à 0.

17. Composition catalytique selon la revendication 16, dans laquelle ledit composé répondant à la formule (IV) est un composé de fluorényle fluoré répondant à la formule (V) suivante : 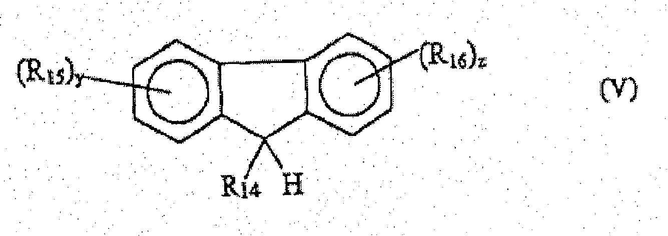 dans laquelle : R₁₄ a la même signification que définie pour les composés répondant à la formule (IV) ;
- y est un nombre entier de 1 à 4 ;
- z est un nombré entier de 1 à 4 ;
les groupes R₁₅ et R₁₆ sont, si nécessaire, indépendamment des substituants de chaque atome d'hydrogène du cycle aromatique respectif dans l'une ou plusieurs des quatre positions disponibles, et sont choisis parmi un atome de fluor ou un groupe hydrocarbyle aliphatique ou aromatique, fluoré ou non fluoré ayant de 1 à 20 atomes de carbone, facultativement liés à un groupe hydrocarbyle R₁₅ différent ou, respectivement, R₁₆, pour former un cycle supplémentaire, à condition qu'au moins 3, de préférence au moins 4, desdits groupes R₄, R₁₅ et R₁₆ soient indépendamment choisis dans le groupe constitué par :
- un atome de fluor, ou
- un groupe alkyle fluoré répondant à la formule -CF(R'₈R'₉), dans laquelle chaque groupe R'₈ ou R'₉ peut avoir l'une quelconque des significations ci-dessus des groupes Rᵢ, et au moins l'un d'entre eux est un atome de fluor, ou un groupe alkyle fluoré au moins en position 1, ou un groupe aryle fluoré Ar_{F} tel que défini ci-dessous, ou un groupe vinyle fluoré V_{F} tel que défini ci-dessous, ou
- un groupe aryle fluoré Ar_{F} substitué sur le cycle aromatique par au moins deux groupes choisis parmi un atome de fluor, un groupe -CF(R'₈R'₉) tel que défini ci-dessus, ou un groupe Ar_{F} différent, ou
- un groupe vinyle fluoré V_{F} substitué en au moins deux positions de la double liaison par des groupes choisis parmi un atome de fluor, un groupe -CF(R'₈R'₉) ou un groupe Ar_{F} tel que défini ci-dessus.

18. Composition catalytique selon l'une quelconque des revendications précédentes de 15 à 17, dans laquelle ledit composé organique fluoré répondant à la formule (IV) ou la formule (V) dans ledit activateur (ii), est ajouté à la composition catalytique dans un rapport molaire allant de 1 à 10, par rapport aux moles du complexe d'allyl-métallocène répondant à la formule (I').

19. Procédé de (co)polymérisation d'au moins une α-oléfine, soit en continu, soit en discontinu, en une ou plusieurs étapes dans des réacteurs appropriés, sous faible (0,1 à 1,0 MPa), moyenne (1,0 à 10 MPa) ou haute (10 à 150 MPa) pression, à des températures allant de 20° à 240 °C, facultativement en présence d'un diluant inerte, **caractérisé en ce que** lesdites une ou plusieurs α-oléfines sont (co)polymérisées, dans l'une des conditions ci-dessus, en présence d'une composition catalytique selon l'une quelconque des revendications précédentes de 9 à 18.

20. Procédé selon la revendication 19, dans lequel ladite au moins une α-oléfine est l'éthylène.

21. Procédé selon la revendication 20, dans lequel l'éthylène est co-polymérisé avec au moins une deuxième α-oléfine ayant de 3 à 10 atomes de carbone.

22. Procédé selon la revendication 21, dans lequel, en plus de ladite deuxième α-oléfine, un diène non conjugué aliphatique ou cyclique, ayant de 5 à 20 atomes de carbone, est co-polymérisé avec l'éthylène.

23. Procédé selon l'une quelconque des revendications précédentes de 19 à 22, **caractérisé en ce qu'**il est réalisé en solution ou en suspension dans un milieu liquide inerte consistant en un hydrocarbure aliphatique ou cycloaliphatique ayant de 3 à 15 atomes de carbone, ou un mélange de ceux-ci.

24. Procédé selon l'une quelconque des revendications précédentes de 19 à 23, dans lequel ladite composition catalytique est préparée séparément et est ultérieurement mise au contact de ladite au moins une α-oléfine.

25. Procédé selon l'une quelconque des revendications précédentes de 20 à 24, dans lequel ladite composition catalytique est préparée en plaçant lesdits composants (i) et (ii) au contact les uns des autres, directement dans l'environnement de polymérisation.

26. Composition catalytique selon l'une quelconque des revendications précédentes de 9 à 18, dans laquelle ledit composant (i) est un complexe de cyclopentadiényle selon l'une quelconque des revendications 1 à 8.
